(19)

Europäisches
Patentamt
European
Patent Office
Office européen
des brevets

(11) **EP 4 651 236 A1**

(12) **EUROPEAN PATENT APPLICATION**
published in accordance with Art. 153(4) EPC

(43) Date of publication:
**19.11.2025   Bulletin 2025/47**

(21) Application number: **24785227.0**

(22) Date of filing: **03.04.2024**

(51) International Patent Classification (IPC):
$H01M\ 4/525\ ^{(2010.01)}$     $H01M\ 4/505\ ^{(2010.01)}$
$H01M\ 4/131\ ^{(2010.01)}$     $H01M\ 10/052\ ^{(2010.01)}$
$C01G\ 53/00\ ^{(2025.01)}$     $H01M\ 4/04\ ^{(2006.01)}$
$C30B\ 29/22\ ^{(2006.01)}$     $H01M\ 4/02\ ^{(2006.01)}$

(52) Cooperative Patent Classification (CPC):
Y02E 60/10

(86) International application number:
**PCT/KR2024/004355**

(87) International publication number:
**WO 2024/210526 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.04.2023   KR 20230043514
03.04.2023   KR 20230043515
03.04.2023   KR 20230043517**

(71) Applicant: **LG CHEM, LTD.
Seoul 07336 (KR)**

(72) Inventors:
• **KIM, Do Yeon**
**Daejeon 34122 (KR)**
• **YEO, Soo Jung**
**Daejeon 34122 (KR)**
• **KIM, Kyeong Rak**
**Daejeon 34122 (KR)**

• **KWAK, Ho Young**
**Daejeon 34122 (KR)**
• **KIM, Kyung Inn**
**Daejeon 34122 (KR)**
• **JEONG, Jong Seok**
**Daejeon 34122 (KR)**
• **KANG, Ho Sung**
**Daejeon 34122 (KR)**
• **LEE, Sang Won**
**Daejeon 34122 (KR)**
• **OH, Myoung Hwan**
**Daejeon 34122 (KR)**
• **KIM, Jun Gyu**
**Daejeon 34122 (KR)**
• **PARK, Jung Won**
**Daejeon 34122 (KR)**
• **PARK, Je Seob**
**Daejeon 34122 (KR)**

(74) Representative: **Hoffmann Eitle
Patent- und Rechtsanwälte PartmbB
Arabellastraße 30
81925 München (DE)**

(54) **CATHODE ACTIVE MATERIAL, CATHODE CONTAINING SAME, AND LITHIUM SECONDARY BATTERY**

(57)     The present invention relates to a positive electrode active material including a lithium transition metal oxide in a form of a single particle, wherein the lithium transition metal oxide satisfies at least one of Conditions 1 to 3 which are described in the present specification, and a positive electrode and a lithium secondary battery which include the same.

**EP 4 651 236 A1**

[FIG. 1]

**Description**

**TECHNICAL FIELD**

Cross-reference to Related Applications

This application claims priority from Korean Patent Application Nos. 10-2023-0043514, 10-2023-0043515, and 10-2023-0043517, filed on April 3, 2023, the disclosures of which are incorporated by reference herein.

Technical Field

The present invention relates to a positive electrode active material for a lithium secondary battery, and a positive electrode and a lithium secondary battery which include the same.

**BACKGROUND ART**

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving the performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide ($LiCoO_2$), nickel-based lithium transition metal oxide, lithium manganese oxide ($LiMnO_2$ or $LiMn_2O_4$), or a lithium iron phosphate compound ($LiFePO_4$) has been used as a positive electrode active material of the lithium secondary battery. Among them, the lithium cobalt oxide ($LiCoO_2$) has been widely used because it has an advantage of high operating voltage and excellent capacity characteristics, and has been used as a positive electrode active material for high voltage. However, due to an increase in the price of cobalt (Co) and supply instability, there is a limitation in using a large amount of the lithium cobalt oxide as a power source for applications such as electric vehicles, and thus, there is a need to develop a positive electrode active material that may replace the lithium cobalt oxide.

Accordingly, a nickel-based lithium transition metal oxide, in which a portion of cobalt (Co) is substituted with nickel (Ni) or the like, represented by a nickel cobalt manganese-based lithium transition metal oxide has been developed.

The conventionally developed nickel-based lithium transition metal oxide is in a form of a secondary particle in which fine primary particles having a micro average particle diameter ($D_{50}$) are aggregated, wherein it has a large surface area and low particle strength. Thus, in a case in which an electrode is prepared with a positive electrode active material including secondary particles, in which fine primary particles are aggregated, and then rolled, there has been a problem in that an amount of gas generated during cell operation is large due to severe particle cracking and stability is poor. Particularly, with respect to a high nickel-based (high-Ni) lithium transition metal oxide in which an amount of nickel (Ni) is increased to ensure high capacity, chemical stability is further reduced due to the structural problem described above, and it is also difficult to secure thermal stability.

In order to improve the disadvantages of the above-described conventional nickel-based lithium transition metal oxide in the form of a secondary particle in which the fine primary particles are aggregated, a nickel-based lithium transition metal oxide positive electrode active material in a form of a secondary particle, in which macro primary particles having a large average particle diameter ($D_{50}$) are aggregated, has been proposed.

Since the nickel-based lithium transition metal oxide positive electrode active material in the form of a secondary particle, in which the macro primary particles are aggregated, minimizes an interface between the secondary particles, problems, such as thermal stability, lifetime degradation due to a side reaction during an electrochemical reaction, and gas generation, are improved.

A high-Ni lithium transition metal oxide positive electrode active material typically undergoes a washing process to reduce an amount of lithium impurities remaining on a surface. The washing process is advantageous in reducing the gas generation because it removes a lithium by-product on the surface, but it is disadvantageous in terms of lifetime due to surface damage to the positive electrode active material particles. Particularly, the nickel-based lithium transition metal oxide positive electrode active material in the form of a secondary particle, in which the micro primary particles are aggregated, inherently has a problem with poor life characteristics, wherein, if it undergoes the washing process, the life characteristics are more degraded, and resistance is also increased as charge and discharge progress.

[Prior Art Documents]

[Patent Document]

(Patent Document 1) Korean Patent Application Laid-open Publication No. 10-2014-0093529

## DISCLOSURE OF THE INVENTION

### TECHNICAL PROBLEM

An object of the present invention is to provide a lithium secondary battery with reduced gas generation amount and improved energy density by developing a positive electrode active material with a single particle form and suppressed particle cracking.

### TECHNICAL SOLUTION

In order to solve the above-described tasks, the present invention provides a positive electrode active material, a positive electrode, and a lithium secondary battery.

(1) The present invention provides a positive electrode active material including a lithium transition metal oxide in a form of a single particle, wherein the lithium transition metal oxide satisfies at least one of Conditions 1 to 3.

[Condition 1] The lithium transition metal oxide has an average cross-sectional area change rate ($\Delta X_{11}$) according to Equation (1) of 5% to 20%;

$$\text{Equation (1)}$$

$$\Delta X_{11} [\%] = [(X_{30\leq} - X_{11}) / X_{30\leq}] \times 100$$

In Equation (1),

$X_{30\leq}$ is an average cross-sectional area [$\mu m^2$] of lithium transition metal oxide particles included in an electrode which includes the lithium transition metal oxide and is not subjected to rolling, and
$X_{11}$ is an average cross-sectional area [$\mu m^2$] of lithium transition metal oxide particles included in an electrode when the electrode is rolled such that porosity is 11%,

[Condition 2] The lithium transition metal oxide has a ratio of the number of particles with a $C_{11}[\%]$ according to Equation (2) of greater than 6% to the total number of particles of the lithium transition metal oxide included in an electrode of 3% or more;

$$\text{Equation (2)}$$

$$C_a[\%] = (a/b) \times 100$$

In Equation (2),
when the electrode including the lithium transition metal oxide is rolled such that porosity is x%, a is a cross-sectional area [$\mu m^2$] of a crack which is formed in the lithium transition metal oxide particle included in the electrode, and b is a cross-sectional area [$\mu m^2$] of the lithium transition metal oxide particle included in the electrode, and
[Condition 3] When an electrode including the lithium transition metal oxide is rolled such that porosity is 11%, the lithium transition metal oxide has a ratio of the number of particles with cracks to the total number of particles of the lithium transition metal oxide included in the electrode of 78% or less.

(2) The present invention provides the positive electrode active material of (1) above, wherein the lithium transition metal oxide has the average cross-sectional area change rate ($\Delta X_{11}$) according to Equation (1) of 8% to 15%.

(3) The present invention provides the positive electrode active material of (1) or (2) above, wherein the lithium transition metal oxide has an average cross-sectional area change rate ($\Delta X_{20}$) according to Equation (3) of 1% to 15%.

$$\text{Equation (3)}$$

$$\Delta X_{20} [\%] = [(X_{30\leq} - X_{20}) / X_{30\leq}] \times 100$$

In Equation (3),

$X_{30\leq}$ is an average cross-sectional area [$\mu m^2$] of lithium transition metal oxide particles included in an electrode which includes the lithium transition metal oxide and is not subjected to rolling, and $X_{20}$ is an average cross-sectional area [$\mu m^2$] of lithium transition metal oxide particles included in an electrode when the electrode is rolled such that porosity is 20%.

(4) The present invention provides the positive electrode active material of any one of (1) to (3) above, wherein, when the electrode including the lithium transition metal oxide is rolled such that the porosity is 11%, a ratio of the number of particles with a cross-sectional area of 3 $\mu m^2$ to 4 $\mu m^2$ to the total number of lithium transition metal oxide particles included in the electrode is 40% or less.

(5) The present invention provides the positive electrode active material of any one of (1) to (4) above, wherein the $X_{11}$ is in a range of 5 $\mu m^2$ to 10 $\mu m^2$.

(6) The present invention provides the positive electrode active material of any one of (1) to (5) above, wherein the lithium transition metal oxide has a ratio of the number of particles with a $C_{20}$[%] according to Equation (2) of greater than 6% to the total number of particles of the lithium transition metal oxide included in the electrode of 0.5% or more.

(7) The present invention provides the positive electrode active material of any one of (1) to (6) above, wherein the lithium transition metal oxide has a ratio of the number of particles with the $C_{11}$[%] according to Equation (2) of 0% to 1% to the total number of particles of the lithium transition metal oxide included in the electrode of 40% or less.

(8) The present invention provides the positive electrode active material of any one of (1) to (7) above, wherein the lithium transition metal oxide has a ratio of the number of particles with a $C_{20}$[%] according to Equation (2) of 0% to 1% to the total number of particles of the lithium transition metal oxide included in the electrode of 45% or less.

(9) The present invention provides the positive electrode active material of any one of (1) to (8) above, wherein the lithium transition metal oxide has a ratio of the number of particles with the $C_{11}$[%] according to Equation (2) of 1% to 2% to the total number of particles of the lithium transition metal oxide included in the electrode of 20% or less.

(10) The present invention provides the positive electrode active material of any one of (1) to (9) above, wherein the lithium transition metal oxide has a ratio of the number of particles with a $C_{20}$[%] according to Equation (2) of 1% to 2% to the total number of particles of the lithium transition metal oxide included in the electrode of 20% or less.

(11) The present invention provides the positive electrode active material of any one of (1) to (10) above, wherein, when the electrode including the lithium transition metal oxide is rolled such that the porosity is 20%, the lithium transition metal oxide has the ratio of the number of particles with cracks to the total number of particles of the lithium transition metal oxide included in the electrode of 70% or less.

(12) The present invention provides the positive electrode active material of any one of (1) to (11) above, wherein the lithium transition metal oxide has the ratio of the number of particles with cracks to the total number of particles of 50% or less.

(13) The present invention provides the positive electrode active material of any one of (1) to (12) above, wherein, when the electrode including the lithium transition metal oxide is rolled such that the porosity is 11%, the lithium transition metal oxide has a difference in the ratio of the number of particles with cracks to the total number of lithium transition metal oxide particles included in the electrode before and after the rolling of 20% to 80%.

(14) The present invention provides the positive electrode active material of any one of (1) to (13) above, wherein the lithium transition metal oxide has an average particle diameter ($D_{50}$) of 1.5 $\mu m$ to 6 $\mu m$.

(15) The present invention provides the positive electrode active material of any one of (1) to (14) above, wherein the lithium transition metal oxide is represented by Formula 1.

[Formula 1] $Li(Ni_{1-x-y-z}Co_xMn_yM_z)O_2$

In Formula 1,

M is at least one selected from the group consisting of aluminum (Al), iron (Fe), vanadium (V), chromium (Cr), titanium (Ti), tantalum (Ta), magnesium (Mg), and molybdenum (Mo), and x, y, and z are atomic fractions of independent elements, respectively, wherein $0<x\leq0.25$, $0<y\leq0.25$, $0\leq z<0.1$, and $0<x+y+z\leq0.5$.

(16) The present invention provides a positive electrode for a lithium secondary battery which includes the positive electrode active material of any one of (1) to (15) above.

(17) The present invention provides a lithium secondary battery including the positive electrode of (16) above.

## ADVANTAGEOUS EFFECTS

Since a positive electrode active material according to the present invention may reduce a phenomenon of fine particle generation due to particle cracking, may achieve a high degree of single-particle formation or a low cracked particle ratio, and may reduce a phenomenon of gas generation of a battery when used as a positive electrode active material in the lithium secondary battery, it may significantly improve battery lifetime and may exhibit excellent battery performance.

## BRIEF DESCRIPTION OF THE DRAWINGS

FIG. 1 is a segmentation image of a cross section of a positive electrode including a positive electrode active material prepared in Example 1.

FIG. 2 is a segmentation image of a cross section of a positive electrode including a positive electrode active material prepared in Example 2.

FIG. 3 is a segmentation image of a cross section of a positive electrode including a positive electrode active material prepared in Comparative Example 1.

FIGS. 4(A) and 4(B) are scanning electron microscope (SEM) images of the positive electrode active materials prepared in Example 1 and Comparative Example 1, respectively.

FIGS. 5(A) to 5(C) are SEM images of the positive electrode active materials prepared in Example 1, Example 2, and Comparative Example 1, respectively.

FIG. 6 illustrates a change in particle diameter distribution of a lithium transition metal oxide included in the positive electrode when the positive electrode including the positive electrode active material prepared in Example 1 is pressurized.

FIG. 7 illustrates a change in particle diameter distribution of a lithium transition metal oxide included in the positive electrode when the positive electrode including the positive electrode active material prepared in Comparative Example 1 is pressurized.

FIG. 8 is a graph of gas generation amounts (ml) according to time (weeks) of batteries including the positive electrode active materials prepared in Example 1, Example 2, and Comparative Example 1.

## MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

Hereinafter, the present invention will be described in detail.

In the present invention, the expression "primary particle" denotes a smallest particle unit which is distinguished as one body when a cross section of a positive electrode active material is observed through a scanning electron microscope (SEM), wherein it may be composed of one crystallite or a plurality of crystallites. In the present invention, an average particle diameter ($Dv_{50}$) of the primary particle may be measured using a scanning electron microscope (SEM) (JEOL Ltd., JSM-7900F). Specifically, the average particle diameter may be defined as a particle diameter at a cumulative volume of 50% in a particle size distribution curve (graph curve of particle size distribution) of each particle obtained using the scanning electron microscope (SEM). After a volume of a sphere whose radius is half the particle diameter of the primary particle, which is obtained using the scanning electron microscope (SEM), is set as a volume of the primary particle, the average particle diameter may be measured by calculating a particle diameter at 50% of the cumulative distribution of volume according to the particle diameter in a result of calculating the volume of the primary particle. In the present invention, the particle diameter of the primary particle may be calculated by calculating an area of each primary particle through the number of pixels corresponding to each of the n primary particles present in an SEM image, and calculating a particle diameter of each primary particle present in the SEM image using a radius of a circle having the same area as each primary particle.

In the present invention, a "single particle" is a term used to distinguish from a positive electrode active material particle in a form of a secondary particle formed by aggregation of tens to hundreds of primary particles which has been conventionally commonly used, wherein it is a concept that includes a single particle composed of one primary particle and an aggregate particle of 50 or less primary particles.

In the present invention, an "average particle diameter ($D_{50}$)" may be defined as a particle diameter on the basis of 50% in a volume cumulative particle diameter distribution, and may be measured by using a laser diffraction method. Specifically, after dispersing target particles in a dispersion medium, the dispersion medium is introduced into a commercial laser diffraction particle size measurement instrument (e.g., Microtrac MT 3000) and irradiated with ultrasonic waves of about 28 kHz at an output of 60 W, and the average particle diameter $D_{50}$ based on 50% in a volume cumulative distribution according to the particle diameter in the measurement instrument may then be calculated.

In the present invention, a "degree of single-particle formation" is a value adjusted according to an average particle diameter ($Dv_{50}$) of primary particles constituting a single particle and an average particle diameter ($D_{50}$) of lithium transition metal oxide as a single particle, wherein the closer the average particle diameter ($Dv_{50}$) of the primary particles constituting the lithium transition metal oxide is to the average particle diameter ($D_{50}$) of the lithium transition metal oxide, the higher the degree of single-particle formation is.

In the present invention, a "single crystal" means a crystal in a state in which it does not include a grain boundary in the particle.

In the present invention, when an electrode including a lithium transition metal oxide is prepared, an "average cross-sectional area change rate" refers to one in which a change in average cross-sectional area of lithium transition metal oxide particles included in the electrode, when rolling is performed such that porosity is x% in comparison to unrolling, is expressed as a percentage. An "average cross-sectional area" may be measured by a method of calculating an arithmetic average value of "cross-sectional areas".

In the present invention, after a cross section of a positive electrode is obtained by cutting the positive electrode using an ion milling method by irradiating the positive electrode with an argon (Ar) ion beam using an ion milling device (JEOL Ltd., CP-09IB19520CCP, accelerating voltage: 6 kV) and a scanning electron microscope (SEM) image of the cross section of the positive electrode is taken, the "cross-sectional area" may be confirmed by image processing the image. Specifically, the cross-sectional area may be measured from a two-dimensional segmentation image divided by particle unit which is obtained by processing the image with an image processing program. After preparing a positive electrode including a positive electrode active material to be measured, a cross section of the positive electrode is obtained by cutting it using an ion milling method, a scanning electron microscope (SEM) image of the cross section is obtained, and the segmentation image may then be obtained by inputting the obtained scanning electron microscope image into a deep learning program to identify a plurality of objects included in the image and then segmenting the SEM image into particle units based on the plurality of objects. The "cross-sectional area" may be calculated using the number of pixels corresponding to each of n particles present in the segmentation image.

In the present invention, a "crack" may refer to a broken (cracked) region on a surface of a particle which is distinguished from a boundary having a linear shape of a predetermined size or more between the particles through boundary information learning in an image observed with a scanning electron microscope (SEM). Also, the 'crack' may refer to a region that appears black or a region that appears in a darker color than an adjacent portion in an image observed with a scanning electron microscope (SEM). The region that appears in a darker color is determined by contrast with a surrounding portion, and only a region, which is not the boundary having the linear shape of a predetermined size or more between the particles, is identified as the crack. In contrast, in a case in which there are no cracks, it may appear white or in a brighter color than the crack of the adjacent portion.

In the present invention, after a cross section of a positive electrode is obtained by cutting the positive electrode using an ion milling method by irradiating the positive electrode with an argon (Ar) ion beam using an ion milling device (JEOL Ltd., CP-09IB19520CCP, accelerating voltage: 6 kV) and a scanning electron microscope (SEM) image of the cross section of the positive electrode is taken, a "cross-sectional area of the crack" and a "cross-sectional area of the particle" may be confirmed by image processing the image. Specifically, the cross-sectional area of the crack and the cross-sectional area of the particle may be measured from a two-dimensional segmentation image divided by particle unit which is obtained by processing the image with an image processing program. After preparing a positive electrode including a positive electrode active material to be measured, a cross section of the positive electrode is obtained by cutting it using an ion milling method, a scanning electron microscope (SEM) image of the cross section is obtained, and the segmentation image may then be obtained by inputting the obtained scanning electron microscope image into a deep learning program to identify a plurality of objects included in the image and then segmenting the SEM image into particle units based on the plurality of objects. The "cross-sectional area of the crack" may be calculated using the number of pixels corresponding to the region that appears black or the region that appears in a darker color than the adjacent portion in particles present in the segmentation image, the "cross-sectional area of the particle" may be calculated using the number of pixels corresponding to the particle, and, in this case, when the crack exists in the particle, it may include the cross-sectional area of the crack.

In the present invention, "the number of particles with cracks" may be confirmed by the presence or absence of cracks. The presence or absence of cracks is determined by visually observing the segmented image, wherein a black or relatively darker colored region than an adjacent region is determined to have a crack, and a white or relatively brighter colored region than an adjacent region may be determined to have no cracks.

**Positive Electrode Active Material**

Hereinafter, a positive electrode active material according to the present invention will be described.

The positive electrode active material of the present invention is characterized in that it includes a lithium transition metal oxide, wherein the lithium transition metal oxide is in a form of a single particle, and satisfies at least one of Conditions 1 to 3 below.

[Condition 1] The lithium transition metal oxide has an average cross-sectional area change rate ($\Delta X_{11}$) according to Equation (1) of 5% to 20%;

$$\text{Equation (1)}$$

$$\Delta X_{11}[\%] = [(X_{30 \leq} - X_{11}) / X_{30 \leq}] \times 100$$

In Equation (1),

$X_{30 \leq}$ is an average cross-sectional area [$\mu m^2$] of lithium transition metal oxide particles included in an electrode which includes the lithium transition metal oxide and is not subjected to rolling, and
$X_{11}$ is an average cross-sectional area [$\mu m^2$] of lithium transition metal oxide particles included in an electrode when the electrode is rolled such that porosity is 11%,

[Condition 2] The lithium transition metal oxide has a ratio of the number of particles with a $C_{11}[\%]$ according to Equation (2) below of greater than 6% to the total number of particles of the lithium transition metal oxide included in an electrode of 3% or more;

$$\text{Equation (2)}$$

$$C_a[\%] = (a/b) \times 100$$

In Equation (2),
when the electrode including the lithium transition metal oxide is rolled such that porosity is x%, a is a cross-sectional area [$\mu m^2$] of a crack which is formed in the lithium transition metal oxide particle included in the electrode, and b is a cross-sectional area [$\mu m^2$] of the lithium transition metal oxide particle included in the electrode, and
[Condition 3] When an electrode including the lithium transition metal oxide is rolled such that porosity is 11%, the lithium transition metal oxide has a ratio of the number of particles with cracks to the total number of particles of the lithium transition metal oxide included in the electrode of 78% or less.

The lithium transition metal oxide is in the form of a single particle composed of 50 or less primary particles. That is, the lithium transition metal oxide is a single particle or in the form of a single particle in which 2 to 50 particles are aggregated. Specifically, the lithium transition metal oxide may be in the form of a single particle composed of 2 to 40 primary particles, 2 to 30 primary particles, 2 to 20 primary particles, and 2 to 10 primary particles, and may preferably be in the form of a single particle composed of 2 to 10 primary particles. The form of a single particle is distinct from a secondary particle in which more than 50 primary particles are aggregated.

With respect to a lithium transition metal oxide which is a secondary particle, particle cracking easily occurs during an electrode rolling process, and, as a result, since a specific surface area of the active material is increased, degradation of storage and lifetime performance at high temperatures is intensified. Particularly, with respect to a lithium metal oxide including a high content of nickel, a problem of occurrence of a particle cracking phenomenon during rolling for the preparation of a positive electrode occurs more, and, in this case, a side reaction between the lithium metal oxide and an electrolyte solution may be increased, and physical properties of a secondary battery may be deteriorated.

In the present invention, the problems occurring in the lithium transition metal oxide in the form of a secondary particle as described above are improved by developing the lithium transition metal oxide in the form of a single particle. Particularly, in a case in which the positive electrode active material satisfies any one of Conditions 1 to 3 of the present invention, a secondary battery may be achieved in which the particle cracking phenomenon is suppressed while being in the form of a single particle, and high-temperature life characteristics and high-temperature storage performance are excellent.

**[Condition 1]**

In order to evaluate and quantitatively express a degree of particle cracking before and after rolling of the lithium transition metal oxide in the present invention, a concept of average cross-sectional area change rate ($\Delta X_x$) was used, wherein, when an electrode including the lithium transition metal oxide is prepared, the average cross-sectional area change rate ($\Delta X_x$) is an indicator of how much an average cross-sectional area of lithium transition metal oxide particles included in the electrode, when the electrode is rolled such that porosity is x%, is changed relative to an average cross-sectional area of lithium transition metal oxide particles included in the electrode which is not subjected to rolling.

The porosity (x%) is calculated using a ratio of electrode density to true density of a total solid content of the positive electrode active material.

Specifically, the prepared positive electrode active material, a carbon black conductive agent, and a PVdF binder were mixed in an N-methylpyrrolidone solvent at a weight ratio of 95:2:3 to prepare a positive electrode material mixture (viscosity: 5,000 mPa·S), the positive electrode material mixture was applied to one surface of an aluminum current collector and then dried at 130°C to prepare a positive electrode. In this case, porosity of a positive electrode active material layer in the positive electrode was 30% or more, and the porosity of the positive electrode active material layer was adjusted by rolling to a thickness that satisfies porosity calculated by Equation 1 below.

Porosity (P) = [(true density (T) of the positive electrode active material layer - positive electrode density (D))/true density (T) of the positive electrode active material layer] × 100        [Equation 1]

After punching each positive electrode to a size of 14 pi (ø), mass and thickness of each punched positive electrode were measured and subtracted by mass and thickness of the aluminum current collector to be used as mass (M) and thickness (H) of the positive electrode active material layer.

The positive electrode density (D) was obtained by dividing the mass (M) of the positive electrode active material layer by (positive electrode area (S) × the thickness (H) of the positive electrode active material layer) (D=M/(S×H)).

The true density (T) of each positive electrode active material layer was obtained as a total sum of a ratio of each component of the positive electrode material mixture × true density of each component (T = [(0.95 × true density of the positive electrode active material) + (0.02 × true density of the carbon black conductive agent) + (0.03 × true density of the PVDF binder)]).

That the average cross-sectional area change rate ($\Delta X_x$) is low means that, when the electrode including the lithium transition metal oxide is rolled at a constant strength, a change in cross-sectional area of the particle is low because the phenomenon of lithium transition metal oxide particle cracking occurs less.

The positive electrode active material of the present invention includes a lithium transition metal oxide, wherein the lithium transition metal oxide is in the form of a single particle, and the lithium transition metal oxide has an average cross-sectional area change rate ($\Delta X_{11}$) according to Equation (1) of 5% to 20%.

$$\text{Equation (1)}$$

$$\Delta X_{11}\,[\%]\;=\;[(X_{30\leq}\;-\;X_{11})\;/\;X_{30\leq}]\;\times\;100$$

In Equation (1),

$X_{30\leq}$ is an average cross-sectional area [$\mu m^2$] of lithium transition metal oxide particles included in an electrode which includes the lithium transition metal oxide and is not subjected to rolling, and

$X_{11}$ is an average cross-sectional area [$\mu m^2$] of lithium transition metal oxide particles included in an electrode when the electrode is rolled such that porosity is 11%.

The average cross-sectional area change rate ($\Delta X_{11}$) according to Equation 1 is a value which is determined according to the change in cross-sectional area when the electrode including the lithium transition metal oxide is rolled such that the porosity is 11%, wherein, since the pressure level is similar to or higher than a rolling pressure level during the preparation of the positive electrode, it may be understood as a clearer standard for evaluating the particle cracking phenomenon when used in the lithium secondary battery, and particularly, a tendency when rolling pressure is increased may be confirmed in more detail.

In the present invention, the lithium transition metal oxide has the average cross-sectional area change rate ($\Delta X_{11}$) according to Equation 1 of 5% to 20%, and more specifically, the average cross-sectional area change rate ($\Delta X_{11}$) may be 5% or more, 6% or more, 7% or more, 8% or more, 9% or more, or 10% or more, may be 12% or less, 13% or less, 14% or less, 15% or less, 16% or less, 17% or less, 18% or less, 19% or less, or 20% or less, and may preferably be in a range of 8% to 15%.

When the lithium transition metal oxide satisfies the above physical properties, particle strength is improved to suppress the particle cracking during rolling, and the side reaction with the electrolyte solution may be suppressed by reducing an amount of lithium by-product. Also, excellent physical properties, such as high-temperature life characteristics and storage performance, may be achieved in the lithium secondary battery.

At the same time, when the electrode including the lithium transition metal oxide is rolled such that the porosity is 11%, a ratio of the number of particles with a cross-sectional area of 3 $\mu m^2$ to 4 $\mu m^2$ to the total number of lithium transition metal oxide particles included in the electrode may be 40% or less, and may specifically be 40% or less, 39% or less, 38% or less, 37% or less, 36% or less, 35% or less, 34% or less, or 33% or less.

Also, when the electrode including the lithium transition metal oxide is rolled such that the porosity is 11%, a ratio of the number of particles with a cross-sectional area of 4 $\mu m^2$ to 5 $\mu m^2$ to the total number of lithium transition metal oxide particles included in the electrode may be 22% or less, and may specifically be 22% or less, 21% or less, or 20% or less.

Furthermore, when the electrode including the lithium transition metal oxide is rolled such that the porosity is 11%, a ratio of the number of particles with a cross-sectional area of 10 $\mu m^2$ or more to the total number of lithium transition metal oxide particles included in the electrode may be 5% or more, or 6% or more.

The fact that the lithium transition metal oxide satisfies the above physical properties means that a distribution of the ratios according to the cross-sectional area of the particles before and after the rolling is small because particle cracking after the rolling is suppressed. In a case in which the particles crack easily, a ratio of the particles with a decreased cross-sectional area tends to increase, and a ratio of the particles with a large cross-sectional area of 10 $\mu m^2$ or more tends to decrease.

The $X_{11}$ may be in a range of 5 $\mu m^2$ to 10 $\mu m^2$. More specifically, the $X_{11}$ may be 5.0 $\mu m^2$ or more, or 5.5 $\mu m^2$ or more, and may be 6 $\mu m^2$ or less, 7 $\mu m^2$ or less, 8 $\mu m^2$ or less, 9 $\mu m^2$ or less, or 10 $\mu m^2$ or less.

Also, in the present invention, the average cross-sectional area change rate ($\Delta X_x$) of the lithium transition metal oxide is lower than that of a conventional positive electrode active material even if rolling strength is changed.

For example, the lithium transition metal oxide may have an average cross-sectional area change rate ($\Delta X_{20}$) according to Equation (3) below of 1% to 15%.

Equation (3)

$$\Delta X_{20} [\%] = [(X_{30\leq} - X_{20}) / X_{30\leq}] \times 100$$

In Equation (3),

$X_{30\leq}$ is an average cross-sectional area [$\mu m^2$] of lithium transition metal oxide particles included in an electrode which includes the lithium transition metal oxide and is not subjected to rolling, and

$X_{20}$ is an average cross-sectional area [$\mu m^2$] of lithium transition metal oxide particles included in an electrode when the electrode is rolled such that porosity is 20%.

Also, the average cross-sectional area change rate ($\Delta X_{20}$) according to Equation (3) may be 2% or more, and may be 12% or less, 11% or less, or 10% or less.

Furthermore, according to definition of $\Delta X_x$, the lithium transition metal oxide according to the present invention may have an average cross-sectional area change rate ($\Delta X_{14}$) of 1% to 5%, and specifically, the average cross-sectional area change rate ($\Delta X_{14}$) may be 1% or more, 1.2% or more, or 1.3% or more, and may be 5% or less, 4% or less, 3% or less, 2% or less, or 1.8% or less.

Also, according to the definition of $\Delta X_x$, the lithium transition metal oxide according to the present invention may have an average cross-sectional area change rate ($\Delta X_{16}$) of 3% to 15%, and specifically, the average cross-sectional area change rate ($\Delta X_{16}$) may be 3% or more, 5% or more, 7% or more, or 8% or more, and may be 15% or less, 12% or less, or 10% or less.

Satisfying all of the average cross-sectional area change rates according to various rolling strengths means that, since it is structurally stable and cracks do not occur, battery characteristic degradation and high-temperature stability problem due to the particle cracking and gas generation may be improved. Also, in a case in which the porosity is maximized to a level where there is no particle cracking, high electrode density may be obtained, and it may be advantageous in terms of energy density per volume of the secondary battery.

**[Condition 2]**

In order to evaluate and quantitatively express the degree of particle cracking before and after the rolling of the lithium transition metal oxide in the present invention, a concept of a ratio ($C_x$[%]) of cross-sectional area [$\mu m^2$] of a crack in the lithium transition metal oxide is used. When an electrode including the lithium transition metal oxide is rolled such that porosity is x%, $C_x$[%] represents a ratio of cross-sectional area of a crack generated in a lithium transition metal oxide particle included in the electrode, wherein it is an indicator of strength and resistance to rolling of the lithium transition metal oxide and a degree of crack generation and particle cracking.

For example, a large $C_x$[%] value means that a crack with a large area is generated in a particle of the lithium transition metal oxide due to rolling, and the fact that a ratio ($A_{x,y}$) of particles with a predetermined value (y) or more of the $C_x$[%] value is high means that cracks are generated in many particles due to the rolling. The generation of the crack in the particle due to the rolling is a different concept from the occurrence of the particle cracking, wherein, since the generation of the crack in the particle means that the crack is generated while the particle is resisting the rolling without cracking, it may be interpreted that the greater the number of particles with a high $C_x$[%] value is, the higher the strength of the lithium transition metal oxide particles is.

In the present invention, the ratio ($A_{x,y}$) of particles with a predetermined value (y) of $C_x$[%] is defined. Since the $C_x$[%] value is the ratio of the cross-sectional area of the crack formed in the lithium transition metal oxide particle included in the electrode when the electrode including the lithium transition metal oxide is rolled such that the porosity is x%, the ratio ($A_{x,y}$) of particles with a constant value (y) of $C_x$[%] is a concept that represents the number of particles with the constant value (y) of $C_x$[%] among the total number of particles when the lithium transition metal oxide particles included in the electrode are taken as the total number of particles.

The positive electrode active material of the present invention includes a lithium transition metal oxide, wherein the lithium transition metal oxide has a ratio of the number of particles with a $C_{11}$[%] according to Equation (2) below of greater than 6% to the total number of particles of the lithium transition metal oxide included in an electrode of 3% or more.

$$\text{Equation (2)}$$

$$C_a[\%] = (a/b) \times 100$$

In Equation (2),
when the electrode including the lithium transition metal oxide is rolled such that porosity is x%, a is a cross-sectional area [$\mu m^2$] of a crack which is formed in a lithium transition metal oxide particle included in the electrode, and b is a cross-sectional area [$\mu m^2$] of the lithium transition metal oxide particle included in the electrode.

The $C_{11}$[%] according to Equation (2) is a value which is determined according to a crack generation cross-sectional area of each particle of the lithium transition metal oxide included in the electrode when the electrode including the lithium transition metal oxide is rolled such that the porosity is 11%. Since the pressure level is similar to or higher than the rolling pressure level during the preparation of the positive electrode, it may be understood as a clearer standard for evaluating the particle cracking phenomenon when used in the lithium secondary battery, and particularly, the tendency when the rolling pressure is increased may be confirmed in more detail.

In the present invention, the lithium transition metal oxide has the ratio of the number of particles with the $C_{11}$[%] according to Equation (2) of greater than 6% to the total number of particles of the lithium transition metal oxide included in the electrode of 3% or more, and specifically, the ratio may be 3% or more, 3.5% or more, 4.0% or more, or 4.5% or more. This means that cracks are generated in a predetermined percentage or more of the lithium transition metal oxide particles due to rolling, and, particularly, this means that there are many particles with a large number of cracks so wide that the $C_{11}$[%] is greater than 6%.

As described above, since the lithium transition metal oxide of the present invention generates cracks by resisting the pressure caused by the rolling, it may suppress the particle cracking phenomenon and may suppress the side reaction with the electrolyte solution by reducing the amount of the lithium by-product. Also, excellent physical properties, such as high-temperature life characteristics and storage performance, may be achieved in the lithium secondary battery.

Also, in the present invention, the lithium transition metal oxide may have a ratio of the number of particles with the $C_{11}$[%] according to Equation (2) of 0% to 1% to the total number of particles of the lithium transition metal oxide included in the electrode of 40% or less, and more specifically, the ratio may be 25% or more, 28% or more, or 30% or more, and may be 40% or less.

Furthermore, in the present invention, the lithium transition metal oxide may have a ratio of the number of particles with the $C_{11}$[%] according to Equation (2) of 1% to 2% to the total number of particles of the lithium transition metal oxide included in the electrode of 20% or less, and more specifically, the ratio may be 5% or more, 6% or more, 7% or more, 8% or more, 9% or more, 10% or more, or 11% or more, and may be 20% or less.

Also, in a case in which rolling is not performed after preparing the positive electrode in the present invention, if the ratio of the cross-sectional area of the crack according to Equation (2) is defined as $C_{30\leq}$ [%], a ratio ($A_{11\leq,\ 0\text{-}1}$) of the number of particles with the $C_{11}$[%] according to Equation (2) of 0% to 1% to the total number of particles of the lithium transition metal oxide included in the electrode may be higher than a ratio ($A_{30\leq,\ 0\text{-}1}$) of the number of particles with a $C_{30\leq}$ [%] of 0% to 1% to the total number of particles of the lithium transition metal oxide included in the electrode. Also, a ratio ($A_{11\leq,\ 6<}$) of the number of particles with the $C_{11}$ [%] according to Equation (2) of greater than 6% to the total number of particles of the lithium transition metal oxide included in the electrode may be higher than a ratio ($A_{30\leq,\ 6<}$) of the number of particles with a $C_{30<}$ [% ] of greater than 6% to the total number of particles of the lithium transition metal oxide included in the electrode.

Particularly, with respect to the lithium transition metal oxide of the present invention, since the crack generation instead of particle cracking is increased during the rolling, the ratio of the number of particles with small area cracks is high as described above.

Specifically, a difference between the ratio ($A_{11,\ 0\text{-}1}$) of the number of particles with the $C_{11}$[%] according to Equation (2) of 0% to 1% to the total number of particles of the lithium transition metal oxide included in the electrode and the ratio ($A_{30\leq,\ 0\text{-}1}$) of the number of particles with the $C_{30\leq}$ [%] of 0% to 1% to the total number of particles of the lithium transition metal oxide included in the electrode may be 15% or more, and may specifically be 15% or more, 18% or more, or 20% or more.

Specifically, a difference between the ratio ($A_{11\leq,\ 6<}$) of the number of particles with the $C_{11}$[%] according to Equation (2) of greater than 6% to the total number of particles of the lithium transition metal oxide included in the electrode and the ratio ($A_{30\leq,6<}$) of the number of particles with the $C_{30\leq}$ [%] of greater than 6% to the total number of particles of the lithium transition metal oxide included in the electrode may be 3% or more, and may specifically be 3% or more, 3.5% or more, 4.0% or more, or 4.5% or more.

This indicates that cracks were generated even in the particles, which did not have cracks when not rolled, of the lithium transition metal oxide included in the positive electrode active material of the present invention by rolling the electrode including the lithium transition metal oxide, and, accordingly, it may be understood that the crack generation in the particles occurred at a high frequency instead of the particle cracking phenomenon.

Also, in the present invention, the lithium transition metal oxide may have a ratio of the number of particles with a $C_{20}$[%] according to Equation (2) of 0% to 1% to the total number of particles of the lithium transition metal oxide included in the electrode of 45% or less, and more specifically, the ratio may be 20% or more, or 25% or more, and may be 45% or less, 40% or less, 39% or less, 38% or less, 37% or less, 36% or less, 35% or less, or 34% or less.

Furthermore, in the present invention, the lithium transition metal oxide may have a ratio of the number of particles with the $C_{20}$[%] according to Equation (2) of 1% to 2% to the total number of particles of the lithium transition metal oxide included in the electrode of 20% or less, and more specifically, the ratio may be 5% or more, 6% or more, 7% or more, 8% or more, 9% or more, 10% or more, 11% or more, 12% or more, or 15% or more, and may be 20% or less.

Also, in the present invention, the lithium transition metal oxide may have a ratio of the number of particles with the $C_{20}$[%] according to Equation (2) of greater than 6% to the total number of particles of the lithium transition metal oxide included in the electrode of 0.5% or more, and the ratio may be 0.6% or more, or 0.8% or more, and may be 1.5% or less.

Particularly, with respect to the lithium transition metal oxide of the present invention, since the crack generation instead of the particle cracking is increased during the rolling, the ratio of the number of particles with small area cracks is high as described above.

Furthermore, with respect to the lithium transition metal oxide in the present invention, a ratio ($A_{11,\ 1\text{-}2}$) of the number of particles with the $C_{11}$[%] of 1% to 2% to the total number of particles of the lithium transition metal oxide included in the electrode may be higher than a ratio ($A_{20,\ 1\text{-}2}$) of the number of particles with the $C_{20}$[%] of 1% to 2% to the total number of particles of the lithium transition metal oxide included in the electrode.

This indicates that a ratio of particles with cracks in the lithium transition metal oxide included in the positive electrode active material of the present invention was further increased when the rolling strength was further increased, wherein it may be understood that the crack generation in the particles occurred at a high frequency instead of the particle cracking phenomenon even at a certain level of high pressure.

**[Condition 3]**

In order to evaluate and quantitatively express the degree of particle cracking before and after the rolling of the lithium transition metal oxide in the present invention, a concept of a cracked particle ratio [%] of the lithium transition metal oxide included in the electrode is used. The cracked particle ratio [%] represents a ratio of the number of particles with cracks to the total number of lithium transition metal oxide particles included in the electrode as a percentage, wherein, since the lithium transition metal oxide of the present invention has a low ratio of the particles with cracks when the electrode is rolled, it suppresses a side reaction with an electrolyte and prevents problems such as gas generation and degradation of battery cycle characteristics.

The cracked particle ratio [%] may be calculated through a ratio of the number (c) of particles with cracks to the total number (d) of lithium transition metal oxide particles included in the electrode. After an electrode (positive electrode) including a positive electrode active material including the lithium transition metal oxide particles is prepared, the electrode is then cut by an ion milling method to obtain a cross section of the positive electrode, an SEM image of the cross section of the positive electrode is obtained using an SEM, and c and d may be calculated by determining the presence or absence of cracks using an image processing program.

The cracked particle ratio is a value which is determined according to whether or not a crack is generated in each particle when the electrode including the lithium transition metal oxide is rolled such that the porosity is 11%, wherein, since the pressure level is similar to or higher than the rolling pressure level during the preparation of the positive electrode, it may be understood as a clearer standard for evaluating the particle cracking phenomenon when used in the lithium secondary battery, and particularly, the tendency when the rolling pressure is increased may be confirmed in more detail.

In the present invention, when the electrode including the lithium transition metal oxide is rolled such that the porosity is 11%, the lithium transition metal oxide has a ratio of the number of particles with cracks to the total number of particles of the lithium transition metal oxide included in the electrode of 78% or less, and specifically, the ratio may be 78% or less, or 77% or less. This means that the ratio of the lithium transition metal oxide particles with cracks is low even after the rolling, and means that the particle cracking is improved.

As described above, the lithium transition metal oxide of the present invention may suppress the particle cracking phenomenon, and may suppress the side reaction with the electrolyte solution by reducing the amount of the lithium by-product. Also, excellent physical properties, such as high-temperature life characteristics and storage performance, may be achieved in the lithium secondary battery.

Also, in the present invention, when the electrode including the lithium transition metal oxide is rolled such that the porosity is 20%, the lithium transition metal oxide may have a ratio of the number of particles with cracks to the total number of particles of the lithium transition metal oxide included in the electrode of 70% or less, and more specifically, the ratio may be 70% or less, 69% or less, or 68% or less, and may be 50% or more, or 52% or more.

In the present invention, the lithium transition metal oxide may have the ratio of the number of particles with cracks to the total number of particles of 50% or less, and more specifically, the ratio may be 5% or more, 10% or more, 12% or more, or 15% or more, and may be 50% or less, 45% or less, 40% or less, 35% or less, or 30% or less.

In the present invention, when the electrode including the lithium transition metal oxide is rolled such that the porosity is 11%, the lithium transition metal oxide may have a difference in the ratio of the number of particles with cracks to the total number of lithium transition metal oxide particles included in the electrode before and after the rolling of 20% to 80%, and more specifically, the difference may be 20% or more, 30% or more, or 40% or more, and may be 80% or less, 70% or less, 65% or less, or 60% or less.

In the present invention, an average particle diameter ($D_{50}$) of the lithium transition metal oxide may be 1.5 $\mu$m or more, may specifically be 1.5 $\mu$m or more, 2 $\mu$m or more, 3 um or more, or 3.5 $\mu$m or more, and may be 6 $\mu$m or less, 4.5 um or less, or 4 $\mu$m or less.

Since the positive electrode active material of the present invention is in the form of a single particle, it has an advantage of reducing the gas generation and suppressing the particle cracking in comparison to a conventional secondary particle in which primary particles are aggregated. Also, in a case in which the average particle diameter of the single particle is within the above range, performance degradation due to a decrease in rolling density may be prevented and an increase in resistance may be suppressed.

In the present invention, the lithium transition metal oxide may be represented by Formula 1 below.

$$[Formula\ 1] \qquad Li(Ni_{1-x-y-z}Co_xMn_yM_z)O_2$$

In Formula 1,

M is at least one selected from the group consisting of aluminum (Al), iron (Fe), vanadium (V), chromium (Cr), titanium (Ti), tantalum (Ta), magnesium (Mg), and molybdenum (Mo), and

x, y, and z are atomic fractions of independent elements, respectively, wherein $0<x\leq0.25$, $0<y\leq0.25$, $0\leq z<0.1$, and $0<x+y+z\leq0.5$.

M is an element substituted at a transition metal site in the oxide represented by Formula 1, and may include at least one selected from the group consisting of Al, Fe, V, Cr, Ti, Ta, Mg, and Mo.

1-x-y-z represents a molar ratio of nickel among metallic components excluding lithium in the lithium transition metal oxide represented by Formula 1, wherein 1-x-y-z may satisfy $0.5\leq1-x-y-z<1$, preferably, $0.8\leq1-x-y-z\leq0.95$.

x represents a molar ratio of cobalt among the metallic components excluding lithium in the lithium transition metal oxide represented by Formula 1, wherein x may satisfy $0<x\leq0.25$, preferably, $0.025\leq x\leq0.1$.

y represents a molar ratio of manganese among the metallic components excluding lithium in the lithium transition metal oxide represented by Formula 1, wherein y may satisfy $0<y\leq0.25$, preferably, $0.005\leq x\leq0.1$.

z represents a molar ratio of M among the metallic components excluding lithium in the lithium transition metal oxide represented by Formula 1, wherein z may satisfy $0\leq z<0.1$, preferably, $0\leq z\leq0.02$.

Also, the positive electrode active material may include a coating layer formed on a surface thereof, and the coating layer may preferably include B (boron).

Since the coating layer blocks a contact between the positive electrode active material and the electrolyte solution contained in the lithium secondary battery to suppress the occurrence of the side reaction, it may further improve life characteristics and may additionally increase packing density of the positive electrode active material.

The coating layer may be formed on the entire surface of the positive electrode active material, or may be partially formed. Specifically, in a case in which the coating layer is partially formed on the surface of the positive electrode active material, the coating layer may be formed in 20% or more to less than 100% of a total specific surface area of the positive electrode active material. In a case in which the specific surface area of the coating layer is less than 20%, effects of improving the life characteristics and improving the packing density due to the formation of the coating layer may be insignificant.

Furthermore, the positive electrode active material of the present invention may be prepared through the steps of: (S1) preparing a solid-phase raw material mixture including lithium raw material powder, nickel raw material powder, cobalt raw material powder, and manganese raw material powder such that a molar ratio of lithium to total transition metals is in a range of 0.90 to 1.10; (S2) performing primary sintering on the solid-phase raw material mixture and grinding to prepare a primary sintered product; and (S3) mixing lithium raw material powder with the primary sintered product such that a total molar ratio of lithium to total transition metals is in a range of 0.95 to 1.10 and performing secondary sintering.

In the above method, temperature of the secondary sintering may be in a range of 500°C to 900°C, 600°C to 850°C, or 700°C to 800°C.

Also, in step (S1), the solid-phase raw material mixture may further include M raw material powder (where M is at least one selected from the group consisting of Al, Fe, V, Cr, Ti, Ta, Mg, and Mo).

## Method of Preparing Positive Electrode Active Material

The lithium transition metal oxide of the present invention is prepared through a solid-phase synthesis method using the solid-phase raw material mixture, wherein the solid-phase synthesis method has an advantage of being able to mass-produce the lithium transition metal oxide through a relatively simple synthesis process and is particularly advantageous for preparing high-nickel NCM with a high nickel content.

Also, since raw material particles are allowed to have a smaller size and are uniformly mixed by grinding and mixing processes, the particles grow smoothly at a lower temperature, and thus, an excellent degree of single-particle formation and sphericity may be exhibited.

In contrast, in a case in which a process of first preparing a positive electrode active material precursor and then using it to prepare a single-particle positive electrode active material slurry is used, that is, since single-particle formation may not proceed sufficiently due to non-smooth particle growth and an oversintering process is required, it may cause a reduction in capacity when using the battery for reasons such as formation of a rock-salt phase. Furthermore, since a precursor-based secondary particle form coexists, the sphericity and degree of single-particle formation may not be achieved to the extent desired by the present invention.

In the present invention, as the lithium raw material powder, for example, lithium-containing carbonates (e.g., lithium carbonate, etc.), lithium-containing hydrates (e.g., lithium hydroxide hydrate ($LiOH\cdot H_2O$), etc.), lithium-containing hydroxides (e.g., lithium hydroxide, etc.), lithium-containing nitrates (e.g., lithium nitrate ($LiNO_3$) etc.), lithium-containing chlorides (e.g., lithium chloride (LiCl), etc.) may be used. Preferably, at least one selected from the group consisting of lithium hydroxide, lithium hydroxide hydrate, and lithium carbonate may be used as the first lithium raw material.

In the present invention, the nickel raw material powder means raw material powder containing only nickel to provide the nickel as a transition metal. The nickel raw material powder may be at least one selected from the group consisting of nickel oxide, nickel carbonate, nickel sulfate, nickel hydroxide, nickel phosphate, and nickel nitrate.

The cobalt raw material powder may be at least one selected from the group consisting of cobalt carbonate, cobalt sulfate, cobalt hydroxide, and cobalt phosphate.

The manganese raw material powder may be at least one selected from the group consisting of manganese dioxide, manganese carbonate, manganese sulfate, and manganese nitrate.

In the solid-phase raw material mixture prepared in step (S1), the lithium raw material powder, the nickel raw material powder, the cobalt raw material powder, and the manganese raw material powder are mixed in amounts such that a molar ratio of lithium to total transition metals is in a range of 0.90 to 1.10.

If the molar ratio of the lithium is less than 0.90, problems may occur in the formation of a composite transition metal phase according to solid-phase synthesis, and the lack of lithium may reduce discharge efficiency and may significantly increase surface resistance, and, if the mixing molar ratio is greater than 1.10, problems may occur in which residual lithium is increased and performance of the positive electrode active material is degraded.

The molar ratio of the lithium may be a condition controlled to prepare a positive electrode active material which also has excellent performance because the residual lithium is not excessive, while being in the form of a single particle with a high degree of single-particle formation as in the present invention.

In the present invention, the solid-phase raw material mixture is subjected to primary sintering and then ground.

The primary sintering may be performed at a temperature of 400°C to 900°C. When the temperature of the primary sintering is within the above range, an increase in unreacted residual lithium due to low reactivity between the lithium raw material powder and each of the transition metal raw material powders in the solid-phase raw material mixture, or a reduction in capacity and lifetime of the battery due to a lack of lithium in the positive electrode active material may be prevented. Also, the reduction in capacity and lifetime of the battery, which is caused by the degradation of the performance of the positive electrode active material due to local occurrence of an oversintering phenomenon caused by a non-uniform reaction during the primary sintering, may be prevented.

In the present invention, the solid-phase raw material mixture is subjected to primary sintering and then ground. Through the grinding, an average particle diameter (D50) of the primary sintered product may be adjusted to a range of 2 $\mu$m to 4 $\mu$m, or 3 $\mu$m to 4 $\mu$m, and a maximum particle diameter (Dmax) may be adjusted to 30 $\mu$m or less, or 20 $\mu$m or less. Through this grinding process, it is advantageous to prepare a positive electrode active material in the form of a single particle of a desired size, and a single particle having a uniform composition may be finally prepared.

The positive electrode active material of the present invention may be prepared through the step of mixing lithium raw material powder with a product of step (S2) such that a total molar ratio of lithium to total transition metals is in a range of 0.95 to 1.10 and performing secondary sintering.

If the total molar ratio of the lithium to the transition metals after the mixing of the lithium raw material powder is less than 0.95, problems may occur in the formation of the composite transition metal phase according to the solid-phase synthesis, and the lack of lithium may reduce the discharge efficiency and may significantly increase the surface resistance, and, if the total molar ratio of the lithium is greater than 1.10, problems may occur in which the residual lithium is increased and the performance of the positive electrode active material is degraded.

In the present invention, the temperature of the secondary sintering may be in a range of 500°C to 900°C, 600°C to 850°C, or 700°C to 800°C. Also, secondary sintering time may be in a range of 5 hours to 15 hours or 7 hours to 12 hours.

Since the secondary sintering is performed within the above range, insufficient particle growth during the primary sintering may be compensated by supplementing an additional lithium raw material depending on heat energy and circumstances and fine particles generated during the grinding process may be grown and absorbed to prepare a positive electrode active material having an appropriate particle size and a low particle crack rate.

In the present invention, the sintering may be performed in an oxygen or air atmosphere. In a case in which the sintering is performed in the above atmosphere, since a local oxygen partial pressure is increased, crystallinity of the positive electrode active material is improved and control of a surface phase is facilitated. In contrast, in a case in which the sintering is performed in an inert gas atmosphere or a non-oxidizing atmosphere other than the above-described atmosphere, the control of the phase present on the surface becomes difficult because the crystallinity is reduced due to oxygen desorption during the sintering and the surface phase is formed non-uniformly.

Additionally, the present invention may further include a step of forming a coating layer. Preferably, the coating layer may include an element such as B or cobalt (Co), but the present invention is not limited thereto.

For example, the coating element may form a coating layer on the surface of the positive electrode active material through a heat treatment.

The heat treatment for the formation of the coating layer may be performed in a temperature range suitable for applying a coating material to the surface of the positive electrode active material, and may specifically be performed in a temperature range of 100°C to 800°C.

Also, the present invention provides a positive electrode for a lithium secondary battery which includes the positive electrode active material.

Specifically, the positive electrode includes a positive electrode collector, and a positive electrode active material layer which is disposed on at least one surface of the positive electrode collector and includes the above-described positive electrode active material.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder together with the positive electrode active material.

In this case, the positive electrode active material may be included in an amount of 80 wt% to 99 wt%, more specifically, 85 wt% to 98 wt% based on a total weight of the positive electrode active material layer. When the positive electrode active material is included in an amount within the above range, excellent capacity characteristics may be obtained.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the above-described positive electrode active material is used. Specifically, a positive electrode material mixture, which is prepared by dissolving or dispersing the positive electrode active material as well as optionally the binder and the conductive agent in a solvent, is coated on the positive electrode collector, and the positive electrode may then be prepared by drying and rolling the coated positive electrode collector. In this case, types and amounts of the positive electrode active material, the binder, and the conductive agent are the same as those previously described.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the positive electrode material mixture on a separate support and then laminating a film separated from the support on the positive electrode collector.

Furthermore, in the present invention, an electrochemical device including the positive electrode may be prepared. The electrochemical device may specifically be a battery or a capacitor, and may more specifically be a lithium secondary battery.

The lithium secondary battery specifically includes a positive electrode, a negative electrode disposed to face the positive electrode, a separator disposed between the positive electrode and the negative electrode, and an electrolyte, and, since the positive electrode is the same as described above, detailed descriptions thereof will be omitted and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a nonwoven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylenepropylene-diene polymer (EPDM), a sulfonated-EPDM, a styrenebutadiene rubber, a nitrile-butadiene rubber, a fluoro rubber, and various copolymers thereof.

The conductive agent is a component for further improving conductivity of the negative electrode active material, wherein the conductive agent may be added in an amount of 10 wt% or less, preferably, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. Since the electrolyte may have appropriate conductivity and viscosity when the concentration of the lithium salt is included within the above range, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 part by weight to 5 parts by weight based on 100 parts by weight of a total weight of the electrolyte.

As described above, since the lithium secondary battery including the positive electrode active material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

## Examples and Comparative Examples

Hereinafter, the present invention will be described in more detail according to examples. However, the following examples are merely presented to exemplify the present invention, and the scope of the present invention is not limited thereto.

### Example 1

Lithium (Li), nickel (Ni), Co, manganese (Mn), and Al raw materials were added to a mixer in amounts such that a molar ratio of Li:Ni:Co:Mn:Al was 0.97:0.93:0.05:0.01:0.01, and were mixed and ground using high-energy milling equipment. In this case, $LiOH \cdot H_2O$, $Ni(OH)_2$, $Co_3O_4$, $MnO_2$, and $Al_3O_4$ were used as the raw materials.

The mixed and ground raw materials were filled into a crucible at a density of 0.7 g/cc or more, and, after primary sintering was performed at 810°C for 10 hours in an oxygen atmosphere, a primary sintered product thus obtained was ground using a pneumatic grinder. In this case, a size of the primary sintered product was adjusted such that $D_{50}$ was in a range of 2 $\mu$m to 4 $\mu$m and $D_{max} > 20$ $\mu$m.

After mixing the ground primary sintered product with LiOH·$H_2$O such that a molar ratio of lithium to transition metals was 1.00, the mixture was secondarily sintered at 750° C for 5 hours, and then disintegrated with a pneumatic grinder to prepare a positive electrode active material (lithium transition metal oxide).

**Example 2**

A positive electrode active material (lithium transition metal oxide) was prepared in the same manner as in Example 1 except that the primary sintering was performed at a temperature of 830°C.

**Comparative Example 1**

Nickel cobalt manganese hydroxide, Li raw material, and Al raw material were added to a mixer in amounts such that a molar ratio of Li:Ni:Co:Mn:Al was 0.97:0.93:0.05:0.01:0.01 and mixed. In this case, LIOH·$H_2$O, $Ni_{0.94}CO_{0.05}Mn_{0.01}$ $(OH)_2$, and $Al_2O_3$ were used as the raw materials.

The mixed raw materials were filled into a crucible at a density of 0.7 g/cc or more, and, after primary sintering was performed at 760°C for 12 hours in an oxygen atmosphere, a primary sintered product thus obtained was ground using a pneumatic grinder. In this case, a size of the primary sintered product was adjusted such that $D_{50}$ was in a range of 2 $\mu$m to 4 $\mu$m and $D_{max} > 20$ $\mu$m.

**Experimental Examples**

**Experimental Example 1: Related to Condition 1**

(1) Measurement of Cross-sectional Area and Calculation of Average Cross-sectional Area

After an electrode (positive electrode) including each of the positive electrode active materials prepared in the examples and the comparative example was prepared, the electrode was cut by an ion milling method to obtain a cross section of the positive electrode, an SEM image (about 5K magnification) of the cross section of the positive electrode was obtained using an SEM (JEOL Ltd., JSM-7900F), cross-sectional areas of particles were measured using an image processing program, and an average cross-sectional area was calculated and presented in Tables 1 to 3 below.

Specifically, after 95 wt% of each of the positive electrode active materials prepared in the examples and the comparative example, 2.0 wt% of carbon black as a conductive agent, and 3.0 wt% of polyvinylidene fluoride (PVDF), as a binder, were mixed in an N-methylpyrrolidone (NMP) solvent to prepare each positive electrode slurry. After one surface of an aluminum current collector was coated with the above-prepared positive electrode slurry and then dried at 130°C to prepare a positive electrode, rolling was not performed or rolling was performed such that porosity was x%.

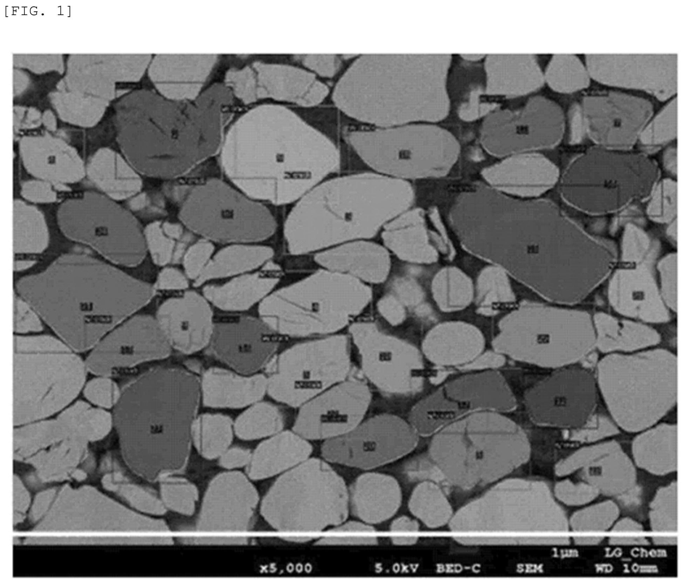

After a cross section of the positive electrode was obtained by cutting the positive electrode using an ion milling method by irradiating the positive electrode with an argon (Ar) ion beam using an ion milling device (JEOL Ltd., CP-09IB19520CCP, accelerating voltage: 6 kV), an SEM image (about 5K magnification) of the cross section of the positive electrode was taken by using an SEM (JEOL Ltd., JSM-7900F). Thereafter, a two-dimensional segmentation image, in which boundaries of particles present in the SEM image were divided and displayed in random colors, was obtained using an image processing program (deep learning program, Mask-RCNN model), and presented in FIGS. 1 to 3.

For reference, an image processing operation includes a method of direct classification by a researcher and an image classification method through deep learning, and, in the present invention, the image classification method through deep learning was used, but the present invention is not limited thereto.

A cross-sectional area of the particle was calculated using the number of pixels corresponding to each of n (about 100 to 200) particles present in the segmentation image, and the total number of lithium transition metal oxide particles included in the electrode (the total number of particles [number]), a ratio ($B_{x,z}$[%]) of the number of particles present for each cross-sectional area (z) to the total number of lithium transition metal oxide particles included in the electrode, and an average cross-sectional area ($X_x$[$\mu$m$^2$]) of the particles present in the segmentation image were calculated and presented in Tables 1 to 3 below. However, particles captured in the resulting image which had a cross-sectional area of less than 3 $\mu$m$^2$, or particles whose overall shape was not observed in the image were excluded because they may undermine the representativeness of the sample.

FIG. 1 is a segmentation image of a cross section of the positive electrode including the positive electrode active material prepared in Example 1.

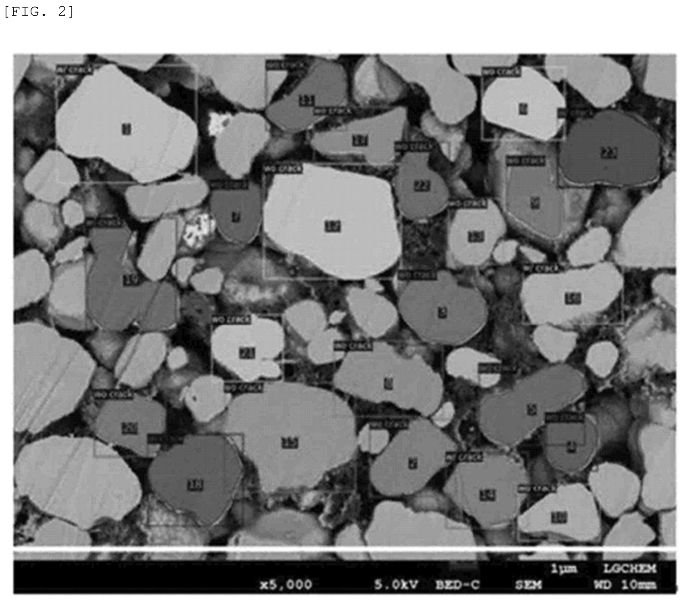

FIG. 2 is a segmentation image of a cross section of the positive electrode including the positive electrode active material prepared in Example 2.

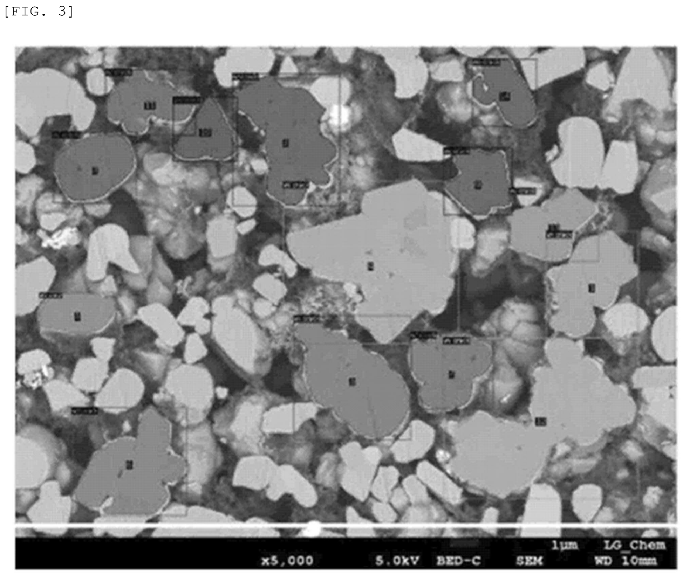

FIG. 3 is a segmentation image of a cross section of the positive electrode including the positive electrode active material prepared in Comparative Example 1.

According to FIGS. 1 to 3, it was confirmed that the positive electrode active materials prepared in Examples 1 and 2 were in the form of a single particle with a high degree of single-particle formation, but the positive electrode active material prepared in Comparative Example 1 had a low degree of single-particle formation. Also, it was confirmed that the positive electrode active materials prepared in Examples 1 and 2 were in the form of a single particle which was composed of 2 to 10 primary particles, and, since the number of grain boundaries was less and a degree of sphericity was higher than that of the positive electrode active material prepared in Comparative Example 1, it was confirmed that particle strength was high and little particle cracking occurred during electrode rolling.

(2) Calculation of Average Cross-sectional Area Change Rate

For the positive electrode active materials of the examples and the comparative example, average cross-sectional areas were calculated using the same method as (1) above by varying unrolling or rolling conditions during the preparation of the electrode, and average cross-sectional area change rates [%] were calculated by the following method.

$$-\Delta X_{11} [\%] = [(X_{30\le} - X_{11}) / X_{30\le}] \times 100$$

$$-\Delta X_{14} [\%] = [(X_{30\le} - X_{14}) / X_{30\le}] \times 100$$

$$-\Delta X_{16} [\%] = [(X_{30\le} - X_{16}) / X_{30\le}] \times 100$$

$$-\Delta X_{20} [\%] = [(X_{30\le} - X_{20}) / X_{30\le}] \times 100$$

$X_{30\le}$ is an average cross-sectional area [$\mu m^2$] of lithium transition metal oxide particles included in the electrode which included the lithium transition metal oxide and was not subjected to rolling, $X_{11}$ is an average cross-sectional area [$\mu m^2$] of the lithium transition metal oxide particles included in the electrode when the electrode was rolled such that porosity was 11%, $X_{14}$ is an average cross-sectional area [$\mu m^2$] of the lithium transition metal oxide particles included in the electrode when the electrode was rolled such that the porosity was 14%, $X_{16}$ is an average cross-sectional area [$\mu m^2$] of the lithium transition metal oxide particles included in the electrode when the electrode was rolled such that the porosity was 16%, and $X_{20}$ is an average cross-sectional area [$\mu m^2$] of the lithium transition metal oxide particles included in the electrode when the electrode was rolled such that the porosity was 20%.

[Table 1]

| | | | Example 1 | | | | |
|---|---|---|---|---|---|---|---|
| | | | Ratio ($B_{x,z}$[%]) of the number of particles according to rolling conditions (porosity: x%) | | | | |
| | | | $B_{30\le,z}$ | $B_{11,z}$ | $B_{14,z}$ | $B_{16,z}$ | $B_{20,z}$ |
| Cross-sectional area (z [$\mu m^2$]) | | 3-4 | 26.3 | 29.2 | 26.3 | 29.7 | 22.5 |
| | | 4-5 | 9.8 | 19.6 | 16.5 | 17.1 | 17.6 |
| | | 5-6 | 15.5 | 11.3 | 12.8 | 13.4 | 18.1 |
| | | 6-7 | 12.4 | 12.5 | 10.7 | 13.4 | 11.0 |
| | | 7-8 | 12.4 | 10.8 | 5.8 | 4.9 | 7.9 |
| | | 8-9 | 5.7 | 3.3 | 7.4 | 7.7 | 4.4 |
| | | 9-10 | 5.2 | 3.8 | 4.9 | 4.5 | 4.4 |
| | | 10< | 12.9 | 9.6 | 15.6 | 9.3 | 14.1 |
| The total number of particles [number] | | | 194 | 240 | 243 | 246 | 227 |
| Average cross-sectional area ($X_x$ [$\mu m^2$]) | | | 6.6 | 5.9 | 6.5 | 6.0 | 6.4 |

(continued)

| | Example 1 | | | | |
|---|---|---|---|---|---|
| | Ratio ($B_{x,z}$[%]) of the number of particles according to rolling conditions (porosity: x%) | | | | |
| | $B_{30\leq,z}$ | $B_{11,z}$ | $B_{14,z}$ | $B_{16,z}$ | $B_{20,z}$ |
| Average cross-sectional area change rate [%] | - | $\Delta x_{11}$=10.6 | $\Delta X_{14}$=1.5 | $\Delta X_{16}$=9.0 | $\Delta X_{20}$=3.0 |

[Table 2]

| | | Example 2 | | |
|---|---|---|---|---|
| | | Ratio ($B_{x,z}$[%]) of the number of particles according to rolling conditions (porosity: x%) | | |
| | | $B_{30\leq,z}$ | $B_{11,z}$ | $B_{20,z}$ |
| Cross-sectional area (z [$\mu m^2$]) | 3-4 | 23.0 | 32.5 | 34.6 |
| | 4-5 | 20.8 | 18.5 | 17.5 |
| | 5-6 | 14.0 | 18.1 | 16.7 |
| | 6-7 | 10.1 | 11.6 | 9.2 |
| | 7-8 | 10.1 | 8.0 | 6.7 |
| | 8-9 | 7.9 | 2.8 | 3.3 |
| | 9-10 | 2.25 | 2.0 | 3.3 |
| | 10< | 11.8 | 6.4 | 8.8 |
| The total number of particles [number] | | 178 | 249 | 240 |
| Average cross-sectional area ($X_x$ [$\mu m^2$]) | | 6.3 | 5.6 | 5.7 |
| Average cross-sectional area change rate [%] | | - | $\Delta X_{11}$=11.1 | $\Delta X_{20}$=9.5 |

[Table 3]

| | | Comparative Example 1 | | |
|---|---|---|---|---|
| | | Ratio ($B_{x,z}$[%]) of the number of particles according to rolling conditions (porosity: x%) | | |
| | | $B_{30\leq,z}$ | $B_{11,z}$ | $B_{20,z}$ |
| Cross-sectional area (z [$\mu m^2$]) | 3-4 | 28.7 | 47.2 | 32.6 |
| | 4-5 | 19.7 | 23.9 | 26.7 |
| | 5-6 | 16.4 | 11.9 | 16.3 |
| | 6-7 | 5.7 | 3.8 | 11.1 |
| | 7-8 | 5.7 | 3.8 | 3.0 |
| | 8-9 | 5.7 | 5.7 | 3.7 |
| | 9-10 | 4.1 | 0.6 | 2.2 |
| | 10< | 13.9 | 3.1 | 4.4 |
| The total number of particles [number] | | 122 | 159 | 135 |

(continued)

| | Comparative Example 1 | | |
|---|---|---|---|
| | Ratio ($B_{x,z}$[%]) of the number of particles according to rolling conditions (porosity: x%) | | |
| | $B_{30\leq,z}$ | $B_{11,z}$ | $B_{20,z}$ |
| Average cross-sectional area ($X_x$ [$\mu m^2$]) | 6.5 | 4.8 | 5.2 |
| Average cross-sectional area change rate [%] | - | $\Delta X_{11}=26.2$ | $\Delta X_{20}=20$ |
| Standard deviation | 4.0 | 1.9 | 2.1 |
| Dispersion | 16.1 | 3.4 | 4.2 |

According to Tables 1 to 3, it was confirmed that the positive electrode active materials of Examples 1 and 2 had the average cross-sectional area change rate ($\Delta X_{11}$) according to Equation (1) described in the present specification of 8% to 15%, and had the average cross-sectional area change rate ($\Delta X_{20}$) according to Equation (3) described in the present specification of 1% to 15%. Also, when the electrode including the lithium transition metal oxide was rolled such that porosity was 11%, it was confirmed that the positive electrode active materials of Examples 1 and 2 had a ratio ($B_{11,3-4}$) of the number of particles with a cross-sectional area of 3 $\mu m^2$ to 4 $\mu m^2$ to the total number of lithium transition metal oxide particles included in the electrode of 40% or less, and it was confirmed that $X_{11}$ was in a range of 5 $\mu m^2$ to 10 $\mu m^2$.

In contrast, it was confirmed that the positive electrode active material of Comparative Example 1 had the average cross-sectional area change rate ($\Delta X_{11}$) according to Equation (1) described in the present specification of greater than 20%, and had the average cross-sectional area change rate ($\Delta X_{20}$) according to Equation (3) described in the present specification of greater than 20%. Also, when the electrode including the lithium transition metal oxide was rolled such that the porosity was 11%, the positive electrode active material of Comparative Example 1 had a ratio ($B_{11,3-4}$) of the number of particles with a cross-sectional area of 3 $\mu m^2$ to 4 $\mu m^2$ to the total number of lithium transition metal oxide particles included in the electrode of greater than 40%, and it was confirmed that $X_{11}$ was less than 5 $\mu m^2$.

This means that the positive electrode active material according to the present invention exhibited a low cross-sectional area change rate because the particle cracking phenomenon was improved during the rolling.

**Experimental Example 2: Related to Condition 2**

After an electrode (positive electrode) including each of the positive electrode active materials prepared in the examples and the comparative example was prepared, the electrode was cut by an ion milling method to obtain a cross section of the positive electrode, and an SEM image (about 5K magnification) of the cross section of the positive electrode was taken using an SEM (JEOL Ltd., JSM-7900F). Thereafter, cross-sectional areas of cracks and cross-sectional areas of particles were measured using an image processing program, and $C_x$ and $A_{x,y}$ were calculated and presented in Tables 4 to 6 below.

Specifically, as in Experimental Example 1, the positive electrode was prepared, the cross-section of the positive electrode was photographed, and a two-dimensional segmentation image was obtained using an image processing program. A region that appeared black or a region that appeared in a darker color than an adjacent portion in each of n (about 100 to 200) lithium transition metal oxide particles present in the segmentation image was defined as a crack. A cross-sectional area [$\mu m^2$] of a crack formed in the lithium transition metal oxide particle was calculated using the number of pixels corresponding to the crack, the number of pixels corresponding to the lithium transition metal oxide particle including the cross-sectional area of the crack was used to calculate a cross-sectional area of the lithium transition metal oxide particle, a percentage ($C_x$[%]) of the cross-sectional area of the crack formed in the lithium transition metal oxide particle to the cross-sectional area of the lithium transition metal oxide particle was calculated, and a ratio ($A_{x,y}$[%]) of the number of particles with a predetermined value (y) of the $C_x$ according to Equation (2) described in the present specification to the total number of lithium transition metal oxide particles included in the electrode, the number of crack-generated particles [number], and the total number of particles [number] are presented in Tables 4 to 6 below.

[Table 4]

| | | Example 1 | | |
| | | Ratio ($A_{x,y}$[%]) of the number of particles according to rolling conditions (porosity: x%) | | |
| | | $A_{30\leq,y}$ | $A_{11,y}$ | $A_{20,y}$ |
| $C_x$(y[%]) | 0-1 | 9.3 | 31.3 | 27.3 |
| | 1-2 | 1.0 | 11.3 | 15.0 |
| | 2-3 | 1.5 | 13.8 | 6.6 |
| | 3-4 | 2.6 | 8.8 | 3.1 |
| | 4-5 | 0.5 | 2.5 | 0.0 |
| | 5-6 | 0.5 | 2.5 | 1.3 |
| | 6< | 0.0 | 4.6 | 0.9 |
| The number of crack-generated particles [number] | | 30 | 179 | 124 |
| The total number of particles [number] | | 194 | 240 | 227 |

[Table 5]

| | | Example 2 | | |
| | | Ratio ($A_{x,y}$[%]) of the number of particles according to rolling conditions (porosity: x%) | | |
| | | $A_{30\leq,y}$ | $A_{11,y}$ | $A_{20,y}$ |
| $C_x$(y[%]) | 0-1 | 13.4 | 40.0 | 33.0 |
| | 1-2 | 3.6 | 19.6 | 19.8 |
| | 2-3 | 2.6 | 7.1 | 7.5 |
| | 3-4 | 2.1 | 3.8 | 3.1 |
| | 4-5 | 1.0 | 2.5 | 2.6 |
| | 5-6 | 0.5 | 0.4 | 0.0 |
| | 6< | 0.0 | 5.8 | 0.9 |
| The number of crack-generated particles [number] | | 30 | 179 | 124 |
| The total number of particles [number] | | 194 | 240 | 227 |

[Table 6]

| | | Comparative Example 1 | | |
| | | Ratio ($A_{x,y}$[%]) of the number of particles according to rolling conditions (porosity: x%) | | |
| | | $A_{30\leq,y}$ | $A_{11,y}$ | $A_{20,y}$ |
| $C_x$(y[%]) | 0-1 | 43.4 | 41.5 | 48.9 |
| | 1-2 | 13.9 | 27.0 | 23.0 |
| | 2-3 | 4.9 | 6.3 | 3.7 |
| | 3-4 | 2.5 | 2.5 | 0.7 |
| | 4-5 | 0.0 | 0.6 | 1.5 |
| | 5-6 | 0.0 | 0.0 | 0.7 |
| | 6< | 2.5 | 1.3 | 0.0 |

(continued)

| | Comparative Example 1 | | |
|---|---|---|---|
| | Ratio ($A_{x,y}$[%]) of the number of particles according to rolling conditions (porosity: x%) | | |
| | $A_{30\leq,y}$ | $A_{11,y}$ | $A_{20,y}$ |
| The number of crack-generated particles [number] | 82 | 126 | 106 |
| The total number of particles [number] | 122 | 159 | 135 |

According to Tables 4 to 6, it was confirmed that the positive electrode active materials of Examples 1 and 2 had a ratio ($A_{11,6<}$) of the number of particles with the $C_{11}$[%] according to Equation (2) described in the present specification of greater than 6% to the total number of lithium transition metal oxide particles included in the electrode of 3% or more. Also, it was confirmed that a ratio ($A_{20,6<}$) of the number of particles with the $C_{20}$[%] according to Equation (2) described in the present specification of greater than 6% to the total number of lithium transition metal oxide particles included in the electrode was 0.5% or more, a ratio ($A_{11,0-1}$) of the number of particles with the $C_{11}$[%] according to Equation (2) described in the present specification of 0% to 1% to the total number of lithium transition metal oxide particles included in the electrode was 40% or less, a ratio ($A_{20,0-1}$) of the number of particles with the $C_{20}$[%] according to Equation (2) described in the present specification of 0% to 1% to the total number of lithium transition metal oxide particles included in the electrode was 45% or less, a ratio ($A_{11,1-2}$) of the number of particles with the $C_{11}$[%] according to Equation (2) described in the present specification of 1% to 2% to the total number of lithium transition metal oxide particles included in the electrode was 20% or less, and a ratio ($A_{20,1-2}$) of the number of particles with the $C_{20}$[%] according to Equation (2) described in the present specification of 1% to 2% to the total number of lithium transition metal oxide particles included in the electrode was 20% or less.

In contrast, it was confirmed that the positive electrode active material of Comparative Example 1 had a ratio ($A_{11,6<}$) of the number of particles with the $C_{11}$[%] according to Equation (2) described in the present specification of greater than 6% to the total number of lithium transition metal oxide particles included in the electrode of less than 3%. Also, it was confirmed that the ratio ($A_{20,6<}$) of the number of particles with the $C_{20}$[%] according to Equation (2) described in the present specification of greater than 6% to the total number of lithium transition metal oxide particles included in the electrode was less than 0.5%, the ratio ($A_{11,0-1}$) of the number of particles with the $C_{11}$[%] according to Equation (2) described in the present specification of 0% to 1% to the total number of lithium transition metal oxide particles included in the electrode was greater than 40%, the ratio ($A_{20,0-1}$) of the number of particles with the $C_{20}$[%] according to Equation (2) described in the present specification of 0% to 1% to the total number of lithium transition metal oxide particles included in the electrode was greater than 45%, the ratio ($A_{11,1-2}$) of the number of particles with the $C_{11}$[%] according to Equation (2) described in the present specification of 1% to 2% to the total number of lithium transition metal oxide particles included in the electrode was greater than 20%, and the ratio ($A_{20,1-2}$) of the number of particles with the $C_{20}$[%] according to Equation (2) described in the present specification of 1% to 2% to the total number of lithium transition metal oxide particles included in the electrode was greater than 20%.

This means that, with respect to the lithium transition metal oxide included in the positive electrode active material of the present invention, since crack generation instead of particle cracking was increased during the rolling, the ratio of the number of particles with small area cracks was high, and this indicates that the ratio of particles with cracks in the lithium transition metal oxide included in the positive electrode active material was further increased when the rolling strength was further increased, wherein this means that the crack generation in the particles occurred at a high frequency instead of the particle cracking phenomenon even at a certain level of high pressure.

**Experimental Example 3: Related to Conditions 2 and 3**

After each of the positive electrode active materials prepared in the examples and the comparative example was put in a circular mold and pressurized at a pressure of 0 tons to 9 tons, compressed pellets were disintegrated with a mortar to check distributions of particles.

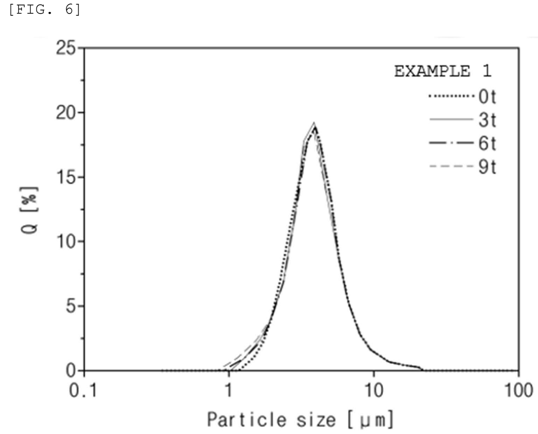

FIG. 6 illustrates a change in particle diameter distribution of the lithium transition metal oxide included in the positive electrode when the positive electrode including the positive electrode active material prepared in Example 1 was pressurized, specifically, after pressurizing at a pressure of 0 tons, 3 tons, 6 tons, and 9 tons. Specifically, the change in particle diameter distribution was represented as a graph of a cumulative distribution function (Q[%]) versus a particle diameter [$\mu$m] of the particle.

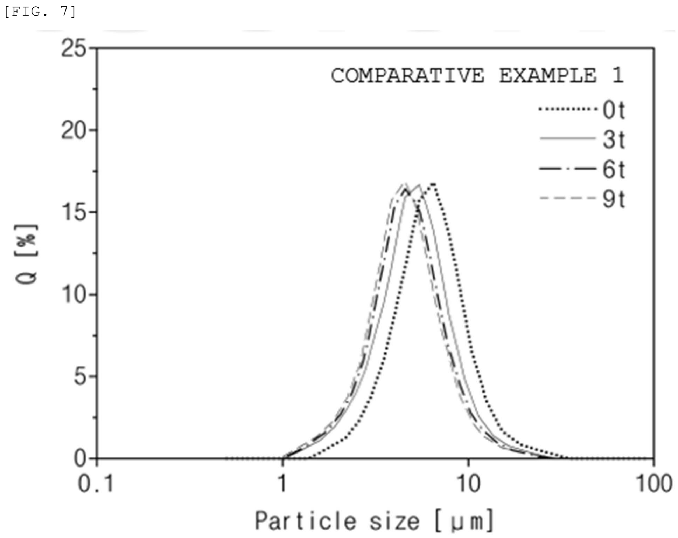

FIG. 7 illustrates a change in particle diameter distribution of the lithium transition metal oxide included in the positive electrode when the positive electrode including the positive electrode active material prepared in Comparative Example 1 was pressurized, specifically, after pressurizing at a pressure of 0 tons, 3 tons, 6 tons, and 9 tons. Specifically, the change in particle diameter distribution was represented as a graph of a cumulative distribution function (Q[%]) versus a particle diameter [μm] of the particle.

According to FIGS. 6 and 7, when the pressure was increased, movement of the distribution curve itself due to particle cracking was hardly observed in the positive electrode active material prepared in Example 1, but since particle cracking of the positive electrode active material prepared in Comparative Example 1 occurred as the pressure was increased, it was confirmed that the particle distribution overall shifted to the left. As a result, it may be understood that cracks were generated instead of particle cracking when the positive electrode active material according to the present invention was pressurized.

**Experimental Example 4: Related to Condition 3**

After an electrode (positive electrode) including each of the positive electrode active materials prepared in the examples and the comparative example was prepared, the electrode was cut by an ion milling method to obtain a cross section of the positive electrode, and an SEM image (about 5K magnification) of the cross section of the positive electrode was taken using an SEM (JEOL Ltd., JSM-7900F). Thereafter, the number of lithium transition metal oxide particles with cracks was determined using an image processing program, and a cracked particle ratio was calculated and presented in Tables 7 to 9 below.

Specifically, as in Experimental Example 1, the positive electrode was prepared, the cross-section of the positive electrode was photographed, and a two-dimensional segmentation image was obtained using an image processing program. The presence or absence of cracks was confirmed by visually observing each of n (about 100 to 200) lithium transition metal oxide particles present in the segmentation image, wherein a black or relatively darker colored region than an adjacent region was determined to have a crack, and a white or relatively brighter colored region than an adjacent region was determined to have no cracks. When the electrode including the lithium transition metal oxide was rolled such that porosity was x%, the total number of lithium transition metal oxide particles included in the electrode (d[number]) and the number of particles with cracks (c[number]) were calculated, and a percentage (cracked particle ratio ($D_x$[%])) of the number of particles with cracks (c[number]) to the total number of lithium transition metal oxide particles (d[number]) is presented in Tables 7 to 9 below.

[Table 7]

| Example 1 | | | |
|---|---|---|---|
| Rolling conditions (porosity: x%) | C [number] | d [number] | Cracked particle ratio ($D_x$[%]) |
| Unrolling | 30 | 194 | 15.46 |
| x=11 | 179 | 240 | 74.58 |
| x=20 | 124 | 227 | 54.63 |

[Table 8]

| Example 2 | | | |
|---|---|---|---|
| Rolling conditions (porosity: x%) | C [number] | d [number] | Cracked particle ratio ($D_x$[%]) |
| Unrolling | 45 | 178 | 25.28 |
| x=11 | 190 | 249 | 76.31 |
| x=20 | 152 | 240 | 67.33 |

[Table 9]

| Comparative Example 1 | | | |
|---|---|---|---|
| Rolling conditions (porosity: x%) | C [number] | d [number] | Cracked particle ratio ($D_x$[%]) |
| Unrolling | 82 | 122 | 67.21 |
| x=11 | 126 | 159 | 79.25 |
| x=20 | 106 | 135 | 78.52 |

According to Tables 7 to 9, when the electrode including the lithium transition metal oxide was rolled such that porosity was 11%, it was confirmed that the positive electrode active materials of Examples 1 and 2 had a ratio ($D_{11}$) of the number of particles with cracks to the total number of lithium transition metal oxide particles included in the electrode of 78% or less. Also, when the electrode including the lithium transition metal oxide was rolled such that the porosity was 20%, it was confirmed that the positive electrode active materials of Examples 1 and 2 had a ratio ($D_{20}$) of the number of particles with cracks to the total number of lithium transition metal oxide particles included in the electrode of 70% or less and the lithium transition metal oxide had a ratio of the number of particles with cracks to the total number of particles of 50% or less.

In contrast, when the electrode including the lithium transition metal oxide was rolled such that porosity was 11%, it was confirmed that the positive electrode active material of Comparative Example 1 had a ratio ($D_{11}$) of the number of particles with cracks to the total number of lithium transition metal oxide particles included in the electrode of greater than 78%. Also, when the electrode including the lithium transition metal oxide was rolled such that the porosity was 20%, it was confirmed that the positive electrode active material of Comparative Example 1 had a ratio ($D_{20}$) of the number of particles with cracks to the total number of lithium transition metal oxide particles included in the electrode of greater than 70% and the lithium transition metal oxide had a ratio of the number of particles with cracks to the total number of particles of greater than 50%.

This indicates that the ratio of particles with cracks in the lithium transition metal oxide included in the positive electrode active material was increased relatively little when the rolling strength was further increased, wherein this means that the particle cracking phenomenon did not occur often even at a certain level of high pressure.

**Experimental Example 5**

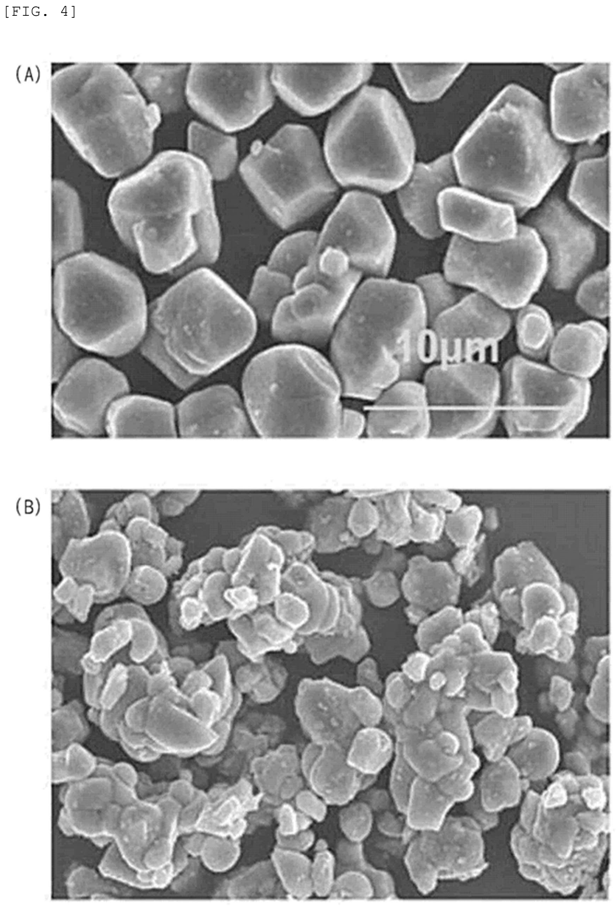

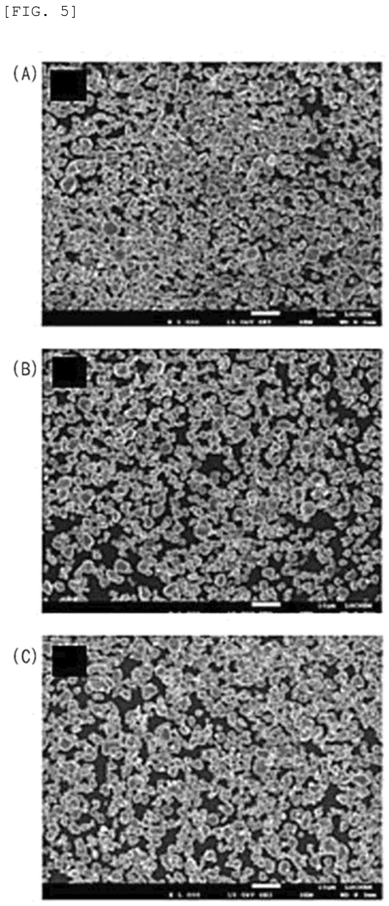

SEM images of the positive electrode active materials prepared in the examples and the comparative example were obtained using an SEM (JEOL Ltd., JSM-7900F), and presented in FIGS. 4 and 5.

FIGS. 4(A) and 4(B) are SEM images of the positive electrode active materials prepared in Example 1 and Comparative Example 1, respectively.

FIGS. 5(A) to 5(C) are SEM images of the positive electrode active materials prepared in Example 1, Example 2, and Comparative Example 1, respectively.

According to FIGS. 4 and 5, it was confirmed that the positive electrode active material prepared in Example 1 was in the form of a single particle with a high degree of single-particle formation, but the positive electrode active material prepared in Comparative Example 1 had a low degree of single-particle formation. Also, it was confirmed that the positive electrode active material prepared in Example 1 was in the form of a single particle which was composed of 2 to 10 primary particles, and, since the number of grain boundaries was less and a degree of sphericity was higher than that of the positive electrode active material prepared in Comparative Example 1, it was confirmed that particle strength was high and little particle cracking occurred during electrode rolling.

**Experimental Example 6**

Each of the positive electrode active materials prepared in the examples or the comparative example, a conductive agent (Denka Black), and a binder (PVDF) were mixed in an N-methyl-2-pyrrolidone (NMP) solvent at a weight ratio of 95:2:3 to prepare a positive electrode slurry. An aluminum current collector was coated with the positive electrode slurry, dried, and then rolled to prepare a positive electrode.

Next, a negative electrode active material (natural graphite), a conductive agent (carbon black), and a binder (SBR+CMC) were mixed in water at a weight ratio of 95.6:1.0:3.4 to prepare a negative electrode slurry. A copper current collector was coated with the negative electrode slurry, dried, and then rolled to prepare a negative electrode.

After an electrode assembly was prepared by disposing a separator between the positive electrode and the negative electrode, the electrode assembly was disposed in a battery case, and an electrolyte solution was then injected to prepare two mono-cells each with an electrode size of 3 cm × 4 cm. In this case, as the electrolyte solution, an electrolyte solution, in which 0.7 M $LiPF_6$ and 0.3 M LiFSI were dissolved in an organic solvent in which ethylene carbonate:ethyl methyl carbonate were mixed in a volume ratio of 3:7, was used.

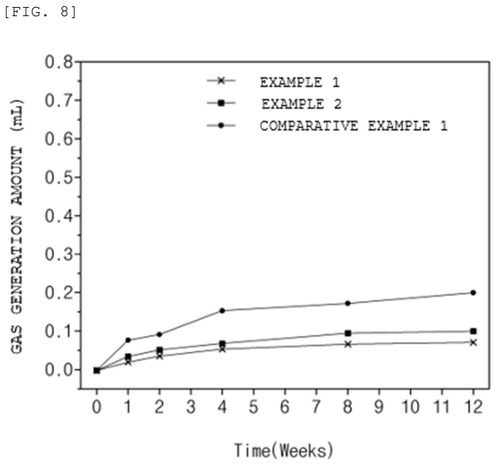

After the two mono-cells were 0.05 C cut-off charged at a constant current of 0.33 C to 4.2 V at 25°C, the positive electrodes were separated. The separated positive electrodes were put in a cell pouch, the electrolyte solution was additionally injected, and the cell pouch was then sealed to prepare a sample. An amount of gas generated was measured while the sample was stored at 60°C for 12 weeks, and the amount of gas generated at 12 weeks is presented in Table 10 and FIG. 8 below.

FIG. 8 is a graph of gas generation amounts (ml) according to time (weeks) of the batteries including the positive electrode active materials prepared in Example 1, Example 2, and Comparative Example 1.

[Table 10]

|  | Gas generation amount (mL) |
|---|---|
| Example 1 | 0.07 |
| Example 2 | 0.1 |
| Comparative Example 1 | 0.2 |

According to Table 10, it was confirmed that the secondary battery using the positive electrode active material according to the present invention had an excellent effect of reducing gas generation.

**Claims**

1. A positive electrode active material comprising a lithium transition metal oxide in a form of a single particle, wherein the lithium transition metal oxide satisfies at least one of Conditions 1 to 3:

   [Condition 1] The lithium transition metal oxide has an average cross-sectional area change rate $(\Delta X_{11})$ according to Equation (1) of 5% to 20%;

   $$\text{Equation (1)}$$

   $$\Delta X_{11}[\%] = [(X_{30\leq} - X_{11}) / X_{30\leq}] \times 100$$

   wherein, in Equation (1),

   $X_{30\leq}$ is an average cross-sectional area $[\mu m^2]$ of lithium transition metal oxide particles included in an electrode which includes the lithium transition metal oxide and is not subjected to rolling, and
   $X_{11}$ is an average cross-sectional area $[\mu m^2]$ of lithium transition metal oxide particles included in an electrode when the electrode is rolled such that porosity is 11%,

   [Condition 2] The lithium transition metal oxide has a ratio of the number of particles with a $C_{11}[\%]$ according to Equation (2) of greater than 6% to the total number of particles of the lithium transition metal oxide included in an electrode of 3% or more;

   $$\text{Equation (2)}$$

   $$C_a[\%] = (a/b) \times 100$$

   wherein, in Equation (2),
   when the electrode including the lithium transition metal oxide is rolled such that porosity is x%, a is a cross-sectional area $[\mu m^2]$ of a crack which is formed in the lithium transition metal oxide particle included in the electrode, and b is a cross-sectional area $[\mu m^2]$ of the lithium transition metal oxide particle included in the electrode, and
   [Condition 3] When an electrode including the lithium transition metal oxide is rolled such that porosity is 11%, the lithium transition metal oxide has a ratio of the number of particles with cracks to the total number of particles of the lithium transition metal oxide included in the electrode of 78% or less.

2. The positive electrode active material of claim 1, wherein the lithium transition metal oxide has the average cross-sectional area change rate $(\Delta X_{11})$ according to Equation (1) of 8% to 15%.

3. The positive electrode active material of claim 1, wherein the lithium transition metal oxide has an average cross-sectional area change rate $(\Delta X_{20})$ according to Equation (3) of 1% to 15%:

Equation (3)

$$\Delta X_{20}[\%] = [(X_{30\le} - X_{20}) / X_{30\le}] \times 100$$

wherein, in Equation (3),

$X_{30\le}$ is an average cross-sectional area [$\mu m^2$] of lithium transition metal oxide particles included in an electrode which includes the lithium transition metal oxide and is not subjected to rolling, and
$X_{20}$ is an average cross-sectional area [$\mu m^2$] of lithium transition metal oxide particles included in an electrode when the electrode is rolled such that porosity is 20%.

4. The positive electrode active material of claim 1, wherein, when the electrode including the lithium transition metal oxide is rolled such that the porosity is 11%, a ratio of the number of particles with a cross-sectional area of 3 $\mu m^2$ to 4 $\mu m^2$ to the total number of lithium transition metal oxide particles included in the electrode is 40% or less.

5. The positive electrode active material of claim 1, wherein the $X_{11}$ is in a range of 5 $\mu m^2$ to 10 $\mu m^2$.

6. The positive electrode active material of claim 1, wherein the lithium transition metal oxide has a ratio of the number of particles with a $C_{20}[\%]$ according to Equation (2) of greater than 6% to the total number of particles of the lithium transition metal oxide included in the electrode of 0.5% or more.

7. The positive electrode active material of claim 1, wherein the lithium transition metal oxide has a ratio of the number of particles with the $C_{11}[\%]$ according to Equation (2) of 0% to 1% to the total number of particles of the lithium transition metal oxide included in the electrode of 40% or less.

8. The positive electrode active material of claim 1, wherein the lithium transition metal oxide has a ratio of the number of particles with a $C_{20}[\%]$ according to Equation (2) of 0% to 1% to the total number of particles of the lithium transition metal oxide included in the electrode of 45% or less.

9. The positive electrode active material of claim 1, wherein the lithium transition metal oxide has a ratio of the number of particles with the $C_{11}[\%]$ according to Equation (2) of 1% to 2% to the total number of particles of the lithium transition metal oxide included in the electrode of 20% or less.

10. The positive electrode active material of claim 1, wherein the lithium transition metal oxide has a ratio of the number of particles with a $C_{20}[\%]$ according to Equation (2) of 1% to 2% to the total number of particles of the lithium transition metal oxide included in the electrode of 20% or less.

11. The positive electrode active material of claim 1, wherein, when the electrode including the lithium transition metal oxide is rolled such that the porosity is 20%, the lithium transition metal oxide has the ratio of the number of particles with cracks to the total number of particles of the lithium transition metal oxide included in the electrode of 70% or less.

12. The positive electrode active material of claim 1, wherein the lithium transition metal oxide has the ratio of the number of particles with cracks to the total number of particles of 50% or less.

13. The positive electrode active material of claim 1, wherein, when the electrode including the lithium transition metal oxide is rolled such that the porosity is 11%, the lithium transition metal oxide has a difference in the ratio of the number of particles with cracks to the total number of lithium transition metal oxide particles included in the electrode before and after the rolling of 20% to 80%.

14. The positive electrode active material of claim 1, wherein the lithium transition metal oxide has an average particle diameter ($D_{50}$) of 1.5 $\mu m$ to 6 $\mu m$.

15. The positive electrode active material of claim 1, wherein the lithium transition metal oxide is represented by Formula 1:

[Formula 1] $\quad$ $Li(Ni_{1-x-y-z}Co_xMn_yM_z)O_2$

wherein, in Formula 1,

M is at least one selected from the group consisting of aluminum (Al), iron (Fe), vanadium (V), chromium (Cr), titanium (Ti), tantalum (Ta), magnesium (Mg), and molybdenum (Mo), and
x, y, and z are atomic fractions of independent elements, respectively, wherein $0 < x \leq 0.25$, $0 < y \leq 0.25$, $0 \leq z < 0.1$, and $0 < x+y+z \leq 0.5$.

16. A positive electrode for a lithium secondary battery, the positive electrode comprising the positive electrode active material of any one of claims 1 to 15.

17. A lithium secondary battery comprising the positive electrode for a lithium secondary battery of claim 16.

[FIG. 1]

[FIG. 2]

[FIG. 3]

[FIG. 4]

(A)

(B)

[FIG. 5]

[FIG. 6]

[FIG. 7]

[FIG. 8]

## INTERNATIONAL SEARCH REPORT

International application No.

**PCT/KR2024/004355**

### A. CLASSIFICATION OF SUBJECT MATTER

**H01M 4/525**(2010.01)i; **H01M 4/505**(2010.01)i; **H01M 4/131**(2010.01)i; **H01M 10/052**(2010.01)i; **C01G 53/00**(2006.01)i; **H01M 4/04**(2006.01)i; **C30B 29/22**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/525(2010.01); C01G 53/00(2006.01); H01M 10/052(2010.01); H01M 10/0562(2010.01); H01M 4/131(2010.01); H01M 4/36(2006.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단입자(single particle), 양극 활물질(positive active material), 리튬 전이금속 산화물(lithium transition metal oxide), 평균 단면적 변화율(average cross-sectional area change rate)

### C. DOCUMENTS CONSIDERED TO BE RELEVANT

| Category* | Citation of document, with indication, where appropriate, of the relevant passages | Relevant to claim No. |
|---|---|---|
| X | KR 10-2022-0041032 A (LG CHEM, LTD.) 31 March 2022 (2022-03-31)<br>See paragraphs [0027] and [0030]; example 1; and table 1. | 1-17 |
| A | KR 10-2019-0131842 A (LG CHEM, LTD.) 27 November 2019 (2019-11-27)<br>See entire document. | 1-17 |
| A | CN 109279659 A (CNGR CO., LTD.) 29 January 2019 (2019-01-29)<br>See entire document. | 1-17 |
| A | CN 111971821 A (SUMITOMO CHEMICAL CO., LTD.) 20 November 2020 (2020-11-20)<br>See entire document. | 1-17 |
| A | KR 10-2019-0009323 A (MITSUI MINING & SMELTING CO., LTD.) 28 January 2019 (2019-01-28)<br>See entire document. | 1-17 |

☐ Further documents are listed in the continuation of Box C.  ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 July 2024** | **09 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/004355**

| Patent document cited in search report | | | Publication date (day/month/year) | Patent family member(s) | | | Publication date (day/month/year) |
|---|---|---|---|---|---|---|---|
| KR | 10-2022-0041032 | A | 31 March 2022 | CN | 115529825 | A | 27 December 2022 |
| | | | | CN | 115529825 | B | 08 March 2024 |
| | | | | EP | 4137460 | A1 | 22 February 2023 |
| | | | | EP | 4137460 | A4 | 28 February 2024 |
| | | | | JP | 2023-521317 | A | 24 May 2023 |
| | | | | JP | 7476344 | B2 | 30 April 2024 |
| | | | | KR | 10-2498355 | B1 | 10 February 2023 |
| | | | | US | 2023-0290942 | A1 | 14 September 2023 |
| | | | | WO | 2022-065935 | A1 | 31 March 2022 |
| KR | 10-2019-0131842 | A | 27 November 2019 | CN | 111819718 | A | 23 October 2020 |
| | | | | EP | 3751646 | A1 | 16 December 2020 |
| | | | | JP | 2021-516424 | A | 01 July 2021 |
| | | | | JP | 7139008 | B2 | 20 September 2022 |
| | | | | KR | 10-2022-0132491 | A | 30 September 2022 |
| | | | | KR | 10-2539694 | B1 | 02 June 2023 |
| | | | | US | 2021-0135187 | A1 | 06 May 2021 |
| | | | | WO | 2019-221497 | A1 | 21 November 2019 |
| CN | 109279659 | A | 29 January 2019 | None | | | |
| CN | 111971821 | A | 20 November 2020 | EP | 3920275 | A1 | 08 December 2021 |
| | | | | EP | 3920275 | A4 | 01 June 2022 |
| | | | | JP | 2020-167042 | A | 08 October 2020 |
| | | | | JP | 6650064 | B1 | 19 February 2020 |
| | | | | KR | 10-2020-0117977 | A | 14 October 2020 |
| | | | | KR | 10-2247128 | B1 | 30 April 2021 |
| | | | | US | 2020-0313183 | A1 | 01 October 2020 |
| | | | | WO | 2020-202708 | A1 | 08 October 2020 |
| KR | 10-2019-0009323 | A | 28 January 2019 | CN | 109478645 | A | 15 March 2019 |
| | | | | CN | 109478645 | B | 28 December 2021 |
| | | | | EP | 3460887 | A1 | 27 March 2019 |
| | | | | JP | 6712638 | B2 | 24 June 2020 |
| | | | | KR | 10-2191227 | B1 | 15 December 2020 |
| | | | | US | 10763499 | B2 | 01 September 2020 |
| | | | | US | 2019-0260018 | A1 | 22 August 2019 |
| | | | | WO | 2018-012015 | A1 | 18 January 2018 |
| | | | | WO | 2018-012522 | A1 | 18 January 2018 |

Form PCT/ISA/210 (patent family annex) (July 2022)

**REFERENCES CITED IN THE DESCRIPTION**

**Patent documents cited in the description**

- KR 1020230043514
- KR 1020230043515
- KR 1020230043517
- KR 1020140093529